# EUROPEAN PATENT SPECIFICATION

(11) **EP 4 217 707 B1**
(45) Date of publication and mention of the grant of the patent: **01.01.2025**
(21) Application number: 21794422.2
(22) Date of filing: 23.09.2021
(51) Int. Cl.: G01N 15/00, G01N 21/05, G01N 21/17, G01N 21/64, G01N 15/10

(54) **DETERMINING INTERACTIONS BETWEEN CELLULAR BODIES AND A FUNCTIONALIZED WALL SURFACE**
BESTIMMEN DER INTERAKTIONEN ZWISCHEN ZELLENKÖRPER UND EINER FUNKTIONALISIERTEN WANDOBERFLÄCHE
DÉTERMINER LES INTERACTIONS ENTRE LES CORPS CELLULAIRES ET UNE SURFACE MURALE FONCTIONNALISÉE

(30) Priority: 25.09.2020 NL 2026548
(43) Date of publication of application: 02.08.2023
(73) Proprietor: LUMICKS CA Holding B.V., 1105 AG Amsterdam (NL)
(72) Inventor: VAN DER HORST, Jelle, 1059 CH Amsterdam (NL)
(74) Representative: De Vries & Metman
(86) International application number: PCT/NL2021/050573
(87) International publication number: WO 2022/066009

(56) References cited:
- US-A9- 2017 139 192
- OIWA K. ET AL: "Steady-state force-velocity relation in the ATP-dependent sliding movement of myosin-coated beads on actin cables in vitro studied with a centrifuge microscope.", vol. 87, no. 20, 1 October 1990 (1990-10-01), pages 7893 - 7897, XP055809994, ISSN: 0027-8424, Retrieved from the Internet <URL:http://dx.doi.org/10.1073/pnas.87.20.7893> [retrieved on 20210602], DOI: 10.1073/pnas.87.20.7893
- KEN HALVORSEN ET AL: "Massively parallel single-molecule manipulation using centrifugal force", ARXIV.ORG, CORNELL UNIVERSITY LIBRARY, 201 OLIN LIBRARY CORNELL UNIVERSITY ITHACA, NY 14853, 1 June 2010 (2010-06-01), XP080384729, DOI: 10.1016/J.BPJ.2010.03.012

## Description

### FIELD OF THE INVENTION

This disclosure relates to methods for determining interaction between cellular bodies and a functionalized wall surface based on a sequence of images. In particular to such methods wherein an interaction is determined based on a determined speed of a cellular body. This disclosure further relates to data processing systems, computer programs and systems for determining interaction between cellular bodies and a functionalized wall surface.

### BACKGROUND

The study of cell interactions, e.g. the binding strength between cells or between cells and biomolecules is a highly relevant and active research area in biosciences. For example, the avidity characterizes the cumulative effect of multiple individual binding interactions between cells. Similarly, the affinity characterizes the strength with which one molecule binds to another molecule, e.g. the strength with which a receptor on the cell membrane of an immune cell binds to an antigen on the target cell. The avidity and affinity are examples of parameters that play an essential role in the study and development of therapies in medicine, e.g. immune oncology.

K. Oiwa et. al. "Steady-state force-velocity relation in the ATP-dependent sliding movement of myosin-coated beads on actin cables in vitro studied with a centrifuge microscope.", vol. 87, no. 20, published on 1 October 1990, discloses a system in which the steady-state force-velocity relation in an actin-myosin interaction can be studied. This document discloses the preamble of claim 1.

A known technique for studying cell adhesion to biomolecules and for studying interaction strengths between cells is referred to as acoustic force spectroscopy, AFS wherein interactions between cells and a functionalized surface can be studied by applying a force to the cells. For example, Kamsma et al. in their article Single-cell acoustic force spectroscopy: resolving kinetics and strength of T cell adhesion to fibronectin, 2018, Cell Reports 24, 3008-3016, September 11, 2018 study the adhesion of T Cells to fibronectin using an acoustic force spectroscopy AFS system. Similarly, WO2018/083193 describes an AFS system including a microfluidic cell comprising a so-called functionalised wall surface which may include target cells. A plurality of unlabelled effector cells, e.g. T-cells, can be flushed into the microfluidic cell, so that they can settle and bind to target cells. Thereafter, an acoustic source is used to exert a ramping force on the bound effector cells so that effector cells will detach from the target cells at a certain force. During this process, the spatiotemporal behaviour of the effector cells in the microfluidic cell is imaged using an imaging microscope. The interaction between cells, e.g. the force at which the effector cells detach, may be determined by analysing the captured video images. For example, the cell avidity of the effector cells can be determined this way.

The imaging microscope may have a focal plane essentially parallel to the functionalised wall surface so that camera acquired images will typically show effector cells in the foreground against a background representing the functionalized wall that comprise the target cells. The analysis of these captured images may include detecting cells and tracking detected cells in two or three dimensions. During a typical AFS experiment, a large amount of effector cells needs to be detected, accurately localized and tracked during the settling of the cells onto the functionalized wall, the binding of the effector cells to target cells (incubation) and/or the detachment of the effector cells from the target cells.

Automatic detection and 3D tracking of a multitude, e.g. thousands or even tens of thousands of cells against a background of a highly dynamic, "living" functionalized wall surface, comprising for example a layer of target cells, is not a trivial problem. During a typical AFS experiment, the software needs to determine for each a cell the interaction between the cell and a functionalized wall surface which may also comprise cells. To that end, the software should be able to accurately determine among others if and when a cell is detached from the functionalized wall surface.

In order for the system to determine the interaction, such as the avidity, as accurate as possible it may be important that only cells that are truly detached should be taken into account in the analysis. However, the dynamics of effector cells attached to target cells in a functionalized wall surface is complex and events detected in the images could be identified as detached cells while in reality they are not. Hence, it is important that such false positives are recognized and properly classified for determining certain parameters such as the avidity.

Hence, from the above, it follows that there is a need in the art for an accurate and robust automated determining of interactions between a cellular body and a functionalized wall surface, preferably in dependence of an applied force.

### SUMMARY

The invention aims to improve the analysis of cell interactions using force spectroscopy. Herein the term *force spectroscopy* is used to indicate any system or method in which a force is applied on particles of interest while a response of the particles to the force is monitored e.g. by imaging the particles with a microscope. The inventors have recognized that the dynamics of cells attached to the functionalized wall surface often is complex and that cells do not always detach from the functionalized wall surface in the same simple manner. The inventors have realized that it is incorrect to identify every cellular body that moves with respect to the functionalized wall surface as a cellular body that has detached from the functionalized wall surface during the application of a force ramp. The inventors in particular found that there are interactions between cellular bodies, wherein a cellular body moves with respect to the functionalized wall surface while still being attached to the functionalized wall surface. This may for example occur when a cellular body is attached at a single site to the functionalized wall surface at a point which is displaced laterally with respect to the center of mass of the cellular body. In such case, the cellular body may "hinge" around the point of attachment due to applied forces and may thus move relative to the functionalized wall surface even if it still attached to the functionalized wall surface. Also, the inventors have found examples where cellular bodies, upon being pulled away from the functionalized wall surface, form so-called tethers, such as membrane tubes, which cause the cellular bodies to remain attached to the functionalized wall surface. Such tethers can be elongated significantly which means that the cellular bodies can travel relatively far away relative to the functionalized wall surface while still remaining attached to it. It should be appreciated that classifying such moving cellular bodies as being detached does not correspond to the physical reality and would distort analyses of binding characteristics, e.g. would yield inaccurate avidity curves.

The invention relates to a method for determining interaction between cellular bodies and a functionalized wall surface. The method comprises obtaining, e.g. determining or receiving, a sequence of images representing manipulating cellular bodies in a holding space, the holding space including a functionalized wall surface configured to bind the cellular bodies, the manipulating including applying a force. The method also comprises a step of tracking first locations of first pixel groups in respective first images out of the sequence of images, each first pixel group in the first images representing a first cellular body out of the cellular bodies, the first locations defining a first trajectory of the first cellular body moving relative to the functionalized wall surface. The method further comprises determining one or more first speed values of the first cellular body at one or more locations of the first trajectory, the one or more speed values being higher than zero and the method may comprise the step of classifying that the first cellular body is attached to the functionalized wall surface based on the one or more first speed values and at least one threshold speed value.

In an embodiment, the classifying may include determining that the one or more first speed values are lower than the at least one threshold speed value.

In an embodiment, a force ramp may be applied to the cellular bodies. In a further embodiment, the force may have a direction away from the functionalized wall surface

Hence, the method determines a detachment event based on the speed at which a cell moves relative to the wall surface during a force spectroscopy experiment. This way, the method allows a more accurately study of binding characteristics of cellular bodies. The method enables to obtain more accurate information from images captured during for example a force spectroscopy measurement as known in the art.

Preferably this method is a computer-implemented method.

The term cellular body used in this application may include cell portions like subcellular organelles, cell nuclei, and/or mitochondria. A cellular body may be unicellular or pluricellular, such as small clumped cell groups, plant or animal biopts, dividing cells, budding yeast cells, colonial protists, etc. A cellular body may also be an animal embryo in an early stage of development (e.g. the morula-stadium of a mammal, possibly a human embryo). In particular cases different types of cellular bodies may be studied together. E.g., cellular bodies from a mucosal swab, blood sample, or other probing techniques could be used. A cellular body may also be one or more immune cells, one or more tumor cells, one or more cells that have been infected, for example by a virus.

The one or more cellular bodies may include at least one of: lymphocytes, monocytic cells, granulocytes, T cells, natural killer cells, B-Cells, CART cells, dendritic cells, Jurkat cells, bacterial cells, red blood cells, macrophages, TCR Tg T-cells, OT-I / OT-II cells, splenocytes, thymocytes, BM derived hematopoietic stem cells, TILs, tissue derived macrophages, innate lymphoid cells.

The functionalized wall surface may have provided thereon one or more target cellular bodies (e.g. tumor cells, stem cells, epithelial cells, B16 melanoma, fibroblasts, endothelial cells, HEK293, HeLa, 3T3, MEFs, HuVECs, microglia, neuronal cells) that are configured to bind the one or more cellular bodies. A functionalized wall surface as referred to herein may be provided with one or more primers. The primers may comprise one or more types of interaction moieties. In particular a functionalized wall surface may be provided with one or more substances comprising at least one of antibodies, peptides, biological tissue factors, biological tissue portions, bacteria, antigens, proteins, ligands, cells, tissues, viruses, (synthetic) drug compounds, lipid (bi)layers, fibronectin, cellulose, nucleic acids, RNA, small molecules, allosteric modulators, (bacterial) biofilms, "organ-on-a-chip", etc., and/or specific atomic or molecular surface portions (e.g. a gold surface) to which at least part of the cellular bodies tends to adhere with preference relative to other surfaces.

An image as used herein may be understood to comprise a plurality of pixels that may be arranged in a raster to form the image. A pixel may be understood to be characterized by its position in the image. Further, when reference is made to a pixel in one image and the same pixel in a different image, then this may be understood to refer to the two pixels having the same position within their respective images, thus the position of the pixel within said one image being the same as the position of the "same pixel" in the different image. Further, pixels groups and regions of interest may be understood to consist of pixels. Likewise, reference may be made to a pixel group or region of interest in one image and the same pixel group or the same region of interest in another image. This may be then understood in that two pixel group or two regions of interest are meant each having the same position in their respective image, thus one pixel group or region of interest having a certain position within said one image and the other pixel group or region of interest having the same certain position within the other image.

A sequence of images may also be referred to as a video. Each image out of the sequence of images may be associated with a time instance, e.g. time-stamped, in the sense that it depicts the situation at that time instance. A "next", "subsequent", or "later" image in the sequence may be understood to be associated with a later time instance, i.e. depicts the situation at a later time instance. "Earliest" image in (a part of) the sequence may refer to the image depicting the earliest situation in that (part of the) sequence.

The detected pixel groups may consist of pixels that are valued such that they distinguish from the background in the images out of the sequence of images. In an example, the detected pixel groups consist of pixels having a relatively high intensity with respect to other pixels in the images. Such other pixels for example represent the background of the image, which may be formed by the functionalized wall surface. The one or more cellular bodies, at the time when the sequence of images was captured, may have been labelled, e.g. fluorescently labelled, so that the one or more cellular bodies stand out from the background.

Detecting pixel groups in respective images, which pixel groups represent a movement relative to the functionalized wall surface of a cellular body may be performed by detecting in each subsequent image the pixel group that represents the cellular body. This may also be referred to as tracking the cellular body. Due to the movement of the cellular body, in principle, each pixel group in an image representing the cellular body has a different position within its image. The speed of the movement relative to the functionalized wall surface is for example determined based on pixel distances as further detailed below.

For a particular cellular body represented by a plurality of pixel groups in respective images, its movement may be understood to be represented by the different position that the pixel groups have within their respective images.

The threshold speed is preferably selected such that it correctly discriminates between cellular bodies attached to the functionalized wall surface and cellular bodies not attached to the functionalized wall surface. The threshold speed may be defined in terms of a number of pixels per second. In such case, the threshold speed in pixels per frame also depends on the frame rate used for capturing the sequence of images, i.e. the time difference between two time instances respectively associated with two subsequent images. The threshold speed may also depend on the magnitude of the applied force and, for example, the viscosity of the sample medium. An appropriate value for the threshold depends on the above-mentioned conditions. For a particular set of conditions, the threshold (or any other means of classification) can be determined from an annotated experimental dataset. This dataset will describe the classification for each cellular body (depending on the image frame), the cellular bodies can be tracked and their speed determined (or other features). The optimal/appropriate threshold can then be determined by finding the value that agrees best with the annotated dataset.

Further, the threshold may vary, for example in dependence of one or more parameters, such as in dependence of an applied force to the cellular bodies or any other parameter. The threshold value may be different for each pair of subsequent images of the sequence of images.

The sequence of images depicts the spatiotemporal response of the one or more cellular bodies while a force is applied to them. In an example, such force may be ramped up, in order to determine the amount of cellular bodies that detached from the functionalized wall surface as a function of the applied force. The movements of the one or more cellular bodies are thus preferably caused by the application of such force. Such force may be applied to the one or more cellular bodies using, for example, a centrifuge system and/or an acoustic wave generator.

In an embodiment, the method comprises determining an avidity curve based on the determination that the first cellular body is attached to the functionalized wall surface e.g. by plotting the number of attached cells as a function of applied force and classifying the first cellular body as attached or excluding the first cellular body from the analysis based on a speed of movement of the first cellular body.

In an embodiment, the method may include tracking second locations of second pixel groups in respective second images out of the sequence of images, each second pixel group in the second images representing a second cellular body out of the cellular bodies, wherein the second locations define a second trajectory of the second cellular body moving relative to the functionalized wall surface; determining one or more second speed values of the second cellular body at one or more positions of the second trajectory; and, classifying that the second cellular body is detached from the functionalized wall surface based on the one or more second speed values and the at least one threshold speed, preferably the classifying including determining that the one or more second speed values are higher than the at least one threshold speed.

This embodiment is advantageous in that the same threshold is used for determining whether a cellular body has detached from the functionalized wall surface. Also, in this embodiment, multiple cellular bodies are analyzed. The first images and second images may refer to the same images.

In an embodiment, the method may further include tracking third locations of third pixel groups in respective third images out of the sequence of images, the third images being later in the sequence of images than the first images, each third pixel group representing the first cellular body, wherein the third locations define a further part of the first trajectory; determining one or more further speed values of the first cellular body relative to the functionalized wall surface at one or more points of the further trajectory; and, classifying that first cellular body is detached from the functionalized wall surface based on the one or more further speed values, preferably the classifying including determining that the further speed is higher than the at least one threshold speed.

This embodiment enables to first classify cellular bodies as being attached to the functionalized wall surface, and then as being detached from the functionalized wall surface.

Preferably, the speed of the movement of the first cellular body is monitored in the sense that the speed of the movement is repeatedly calculated based on different sets of two or more images out of the sequence of images. In early images, depicting the situation at the beginning of an experiment for example, this speed may be lower than the threshold speed, as a result of which the cellular body is determined to be attached to the functionalized wall surface. In later images in the sequence of images, depicting the situation later in the experiment, the movement of the cellular body may be higher than the threshold speed, as a result of which the cellular body may be determined to be detached from the functionalized wall surface.

In an example, the speed is updated for every subsequent image for example in the sense that the speed is determined for each image based on the image and the preceding image.

In an embodiment, the method comprises determining that the first cellular body sits in a cluster, a cluster being an aggregation of cellular bodies, in the images when a force is applied to the first cells, and refraining from classifying the first cellular body in the cluster as attached to the functionalized wall surface and refraining from classifying the first cellular body in the cluster as detached from the functionalized wall surface.

Typically, the cellular bodies in the clusters are not bound to the functionalized wall surface.

The inventors have realized that a cellular body may be driven to such cluster and that it cannot be determined with certainty whether such cellular body is still attached to the functionalized wall surface or not. Therefore, classifying such cellular body as attached or not attached to the functionalized wall surface may introduce errors.

In such embodiment, determining that the first cellular body sits in a cluster comprises determining an intensity of a pixel group out of said pixel groups representing movement of the first cellular body, and determining that the intensity of the pixel group is higher than a threshold intensity, and based on the intensity being higher than the threshold intensity, determining that the first cellular body sits in a cluster.

Additionally or alternatively, determining that a cellular body has ended up in such cluster may also be performed by receiving one or more locations where such clusters are expected and/or identified (e.g. based on close proximity of many cellular bodies) and determining that the cellular body has reached such location. The locations of the clusters may also be determined simply at the end of the force application when the clusters have been actually formed.

In an embodiment, said first images comprise a first particular image and a second particular image, wherein the first particular image comprises a first particular pixel group out of said pixel groups at a first location in the first particular image and the second particular image comprises a second particular pixel group out of said pixel groups at a second location in the second particular image, wherein the first and second locations are different, and wherein the first particular image is associated with a first time instance and the second particular image is associated with a second time instance, and wherein the speed of the movement of the first cellular body relative to the functionalized wall surface is determined based on a time difference between the first and second time instance and a distance between said first location and second location.

In an embodiment, the determining a first speed of the first cellular body at a location at the first trajectory may comprise: determining or receiving time instances associated with two or more images, preferably two or more subsequent images, in which the first cellular body is located at or around one of the one or more locations of the first trajectory; and, determining the first speed based on the time instances and the locations of the first cellular body in the two or more images.

These embodiments provide a convenient manner for determining the speed. The distance between the first and second location may be expressed by an amount of pixels. The distance is for example 2.25 pixels. In particular, the first particular pixel group may have a center, such as a center of mass, and the second particular pixel group may also have a center, such as a center of mass. The distance between the first and second location may be the distance between the respective centers of the first and second particular pixel group. Information of more than two images may also be combined in order to achieve more accurate and / or less noisy results.

In an embodiment, said sequence of images comprises an initial image representing an initial situation in which the first cellular body is bound to the functionalized wall surface. In such embodiment, the method comprises detecting a pixel group at an initial location in the initial image representing the first cellular body being attached to the functionalized wall surface, preferably while the first cellular body does not move.

In an embodiment, the sequence of images may include one or more images of the holding space before applying the force to the cellular bodies, wherein the method may further comprise: detecting the location of the first cellular body in at least one of the one or more images of the holding space before applying the force to the cellular bodies, the location defining an initial location of the first cellular body bound to the functionalized wall.

The initial image may be understood to depict the initial situation in which preferably no force is actively applied, e.g. using an acoustic wave generator, to the one or more cellular bodies.

In an embodiment, said first images comprise a particular image, wherein the particular image comprises a particular pixel group out of said pixel groups at a particular location in the particular image. In such embodiment, the method comprises determining a distance between the particular location and the initial location, and determining that the determined distance is higher than a threshold distance, and, based on the determined distance being higher than the threshold distance, determining that the first cellular body is attached to the functionalized wall surface by means of a tether, such as a membrane tube.

In an embodiment, a distance between the initial location and a further location on the first trajectory and/or a shape of the first trajectory may be used to determine that the first cellular body is attached to the functionalized wall surface by means of a tether, such as a membrane tube.

These embodiments enable to more precisely determine a binding interaction between cellular bodies in that it enables to determine what type of binding is still present between the cellular bodies.

It should be appreciated that for the first cellular body to be determined at some time instance as being attached by means of a tether, such as a membrane tube, preferably both the speed is lower than the threshold speed and the distance between the particular location and the initial location is higher than a threshold distance.

The distances may be expressed as number of pixels.

If the distance is lower than said threshold distance, then the first cellular body may be determined to be a hinge cell referred to above.

It should be appreciated that a cellular body that has first been classified as attached by means of a tether may later, based on later images in the sequence of images, be classified as detached. Also, it should be appreciated that a cellular body may first be classified as a hinge cell, but later, based on later images in the sequence of images, as attached by means of a tether and/or as detached. Further, it should be appreciated that based on methods described herein, cellular bodies that have detached from the functionalized wall surface may be further classified in (i) detached cellular bodies that have been first classified as hinge cellular bodies, and/or (ii) detached cellular bodies that have been first classified as attached by means of a tether, or (iii) as detached cellular bodies that have not been classified as attached by means of a tether and have not been classified as a hinge cellular body.

In an embodiment, the sequence of images comprises initialization images representing the one or more cellular bodies binding to the functionalized wall surface, and wherein detecting a pixel group at an initial location in the initial image comprises
- detecting initialization pixel groups in the respective initialization images, the initialization pixel groups representing an initialization movement of the first cellular body, and
- tracking the location of the first cellular body in the initialization images, wherein for each initialization image the first cellular body is classified as being trackable or not trackable, and
- determining a settling event if during tracking the first cellular body it is classified as non-trackable, the location in the initialization image at which the settling event is detected defining the initial location in the initial image and thus defining a pixel group at the initial location in the initial image.

The detected pixel groups in the respective first images are detected at different locations in the respective first images, the different locations forming a tracking path, the tracking starting point of the tracking path defining a pop-up location in a tracking starting image out of the first images, the tracking starting image being associated with a tracking starting time instance. In such embodiment, the method comprises determining the distance between the initial location and the pup-up location, and determining a time difference between the tracking starting time instance and an force application time instance indicating a time instance at which a force was applied to the first cellular body, determining a speed based on the time difference between the tracking starting time instance and the force application time instance and on the distance between the initial location and the pop-up location, determining that this speed is lower than a second threshold speed and/or higher than a third threshold speed, and, based on this determination, determining that the first cellular body is associated with the initial location, e.g. determining that the first cellular body is attached to the functionalized wall surface at the initial location.

Since the initialization images represent the one or more cellular bodies binding to the functionalized wall surface and the first images, which comprise the tracking starting image, are used to classify that one or more cellular bodies are attached to the wall surface, the initialization images may be understood to come before the first images, and thus before the tracking starting image, in the sequence of images. In other words, the initialization images may be understood to represent the situation at an earlier time than the first images, and, consequently, than the tracking starting image.

In an embodiment, the method comprises determining detachment images out of the sequence of images, the detachment images being the earliest images in the sequence of images that comprise pixel groups representing a speed of movement of the first cellular body that is higher than said threshold speed.

This embodiment enables to accurately determine when during an experiment the first cellular body detached from the functionalized wall surface.

Determining the detachment images may be performed by monitoring the speed of the cellular body throughout the sequence of images, and determining in which images the speed of the cellular body exceeds the threshold speed for the first time.

The detachment images are for example comprised in said third images. The detachment images may thus be later in the sequence of images than the first images (and, consequently, than the tracking starting image) and later in the sequence than the initialization images.

Preferably, each image out of the sequence of images is associated with a value of a force applied to the first one or more cellular bodies and/or with a state of a force application system configured to apply a force to the first one or more cellular bodies. As a result, based on the determined detachment images, the force and/or state of the force application system can be determined at which the first cellular body detached from the functionalized wall surface.

In an embodiment, detecting the pixel groups in the respective first images comprises detecting a pixel group in an image out of the first images, the detected pixel group comprising pixels representing the first cellular body, said pixels having respective pixel values that distinguish them from pixels representing a background of the image, e.g. said pixels having a high intensity value. This embodiment further comprises determining a region of interest in the image, the region of interested comprising the pixels representing the first cellular body and pixels representing the background of the image, and analyzing said region of interest in a subsequent image out of the first images, and identifying in said region of interest pixels having respective pixel values that distinguish them from pixels representing a background of the subsequent image, determining said distinct pixels in the region of interest to represent at least part of the first cellular body, and, based on the identified pixels in the region of interest in the subsequent image, determining a further pixel group in the subsequent image representing the first cellular body.

This embodiment provides a convenient manner for tracking the movement of cellular bodies.

In an embodiment, the method comprises updating, e.g. shifting, the region of interest such that it comprises the further pixel group in the subsequent image, and analyzing said updated region of interest in a further subsequent image, subsequent to the subsequent image, out of the first images, and identifying in the updated region of interest pixels having respective pixel values that distinguish them from pixels representing a background of the further subsequent image, and determining said distinct pixels in the updated region of interest to represent at least part of the first cellular body, and, based on the identified pixels in the region of interest in the subsequent image, determining an even further pixel group in the further subsequent image representing the first cellular body.

This method also provides a convenient way for tracking the movement of cellular bodies throughout several images. This embodiment may namely be repeatedly performed in the sense that the region of interest is updated for every image.

Preferably, updating the region of interest is performed such that the updated region of interest comprises at its center the center of mass of the further pixel group.

One aspect of this disclosure relates to a method for determining interaction between cellular bodies, the method comprising for each of a plurality of cellular bodies represented in the sequence of images,
- detecting pixel groups in respective images out of the sequence of images, the pixel groups representing a movement relative to the functionalized wall surface of the cellular body in question, and determining a speed of said movement of the cellular body in question relative to the functionalized wall surface based on said respective images, the determined speed being higher than zero, and
- determining that the speed is lower than a threshold speed, and, based on the determined speed being lower than said threshold speed, determining that the cellular body in question is attached to the functionalized wall surface, and/or
- determining that the speed is higher than said threshold speed, and, based on the determined speed being higher than said threshold speed, determining that the cellular body in question has detached from the functionalized wall surface.

Another aspect of the disclosure relates to a method for determining interaction between cellular bodies, wherein the method may comprise: obtaining, e.g. determining or receiving, a sequence of images representing manipulating cellular bodies in a holding space, the holding space including a functionalized wall configured to bind the cellular bodies, the manipulating including applying a force on the settled cellular bodies away from the functionalized holding space; for each of a plurality of cellular bodies represented in the sequence of images: tracking locations of pixel groups in respective images out of the sequence of images, each pixel group in the images representing a cellular body out of the cellular bodies, the locations in the respective images defining a trajectory of the cellular body moving relative to the functionalized wall surface; determining one or more first speed values of the cellular body at one or more locations of the trajectory, the one or more speed values being higher than zero; and, classifying that the cellular body is attached to or detached from the functionalized wall surface based on the one or more speed values and at least one threshold speed value.

In yet another aspect, the disclosure may relate to a method for determining interaction between cellular bodies comprising: receiving a sequence of images representing cellular bodies bound to a functionalized wall of a flow cell and subsequent application a force on the cellular bodies; determining initial locations of cellular bodies that are bound to the functionalized in images representing the cellular bodies bound to the functionalized wall; tracking positions of the detected cellular bodies in images representing the application of a force on the cellular bodies, the tracked positions of a cellular body defining a trajectory of the cellular body moving in the flow cell; determining the travelling speed of a tracked cellular body for different positions on its trajectory; and, classifying a tracked cellular body based on the travelling speed and a speed threshold value, and, optionally, other parameters such as the initial position or the shape of the trajectory.

Of course, the methods described herein may be performed in parallel on many cellular bodies that are present in a single sequence of images. Thousands of cellular bodies may be analyzed in a single experiment.

This embodiment may comprise determining an avidity curve based on the respective determinations whether the cellular bodies are attached to the functionalized wall surface or not in relation to a force being applied to the cellular bodies.

One aspect of this disclosure relates to a method for determining interaction between cellular bodies comprising providing a sample holder comprising a holding space, wherein the holding space comprises, e.g. is substantially filled with, a fluid medium and comprises the functionalized wall surface, and the one or more cellular bodies in the fluid medium, wherein the one or more cellular bodies are bound the functionalized wall surface, and applying a force to the one or more cellular bodies for separating at least some of the one or more cellular bodies from the functionalized wall surface, and capturing a sequence of images from the one or more cellular bodies while said force is applied, and determining interaction between the one or more cellular bodies and functionalized wall surface based on the captured images in accordance with any of the preceding claims.

One aspect of this disclosure relates to a data processing system comprising a
a computer readable storage medium having computer readable program code embodied therewith, and a processor, preferably a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a computer system, being configured for executing any of the methods described herein.

One aspect of this disclosure relates to a system for determining interaction between cellular bodies and a functionalized wall surface, the system comprising a sample holder comprising a holding space for holding a fluid medium, a functionalized wall surface and one or more cellular bodies, and a force generator for providing a force to the one or more cellular bodies in the holding space, and an imaging system for capturing images of the one or more cellular bodies in the holding space, and a data processing system as described herein.

The data processing system may be configured to control the force generator as well.

One aspect of this disclosure relates to a non-transitory computer-readable storage medium storing at least one software code portion, the software code portion, when executed or processed by a computer, is configured to perform any of the methods described herein.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a standalone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided. A computer program may, for example, be downloaded (updated) to the existing data processing systems or be stored upon manufacturing of these systems.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 schematically depicts a force spectroscopy system according to an embodiment;
Fig. 2A-2C schematically depict cross-sectional views of a sample holder according to an embodiment;
Fig. 3A-3D depict schematics of processes occurring in a holding space according to an embodiment;
FIG. 4 illustrate examples of avidity curves measured using an acoustic force spectroscopy system;
FIG. 5 schematically illustrates a sequence of images A-F representing several cellular bodies in the holding space according to an embodiment;
FIG. 6A is a combined image in which all pixel groups representing cellular bodies in images A-F are indicated;
FIG. 6B depicts an image taken by a camera of an acoustic force spectroscopy system;
FIG. 7 illustrates how tracking pixel groups representing a movement of a cellular body may be performed according to an embodiment;
FIG. 8 depicts a flow diagram of a method of determining an interaction between cellular bodies and a functionalized wall according to an embodiment of the invention.
FIG. 9 depicts examples of avidity curves determined based on a method according to an embodiment of the invention and associated RMS errors.
FIG. 10 Illustrates an embodiment using centrifugal force application.
FIG. 11 illustrates a data processing system according to an embodiment.

### DETAILED DESCRIPTION OF THE DRAWINGS

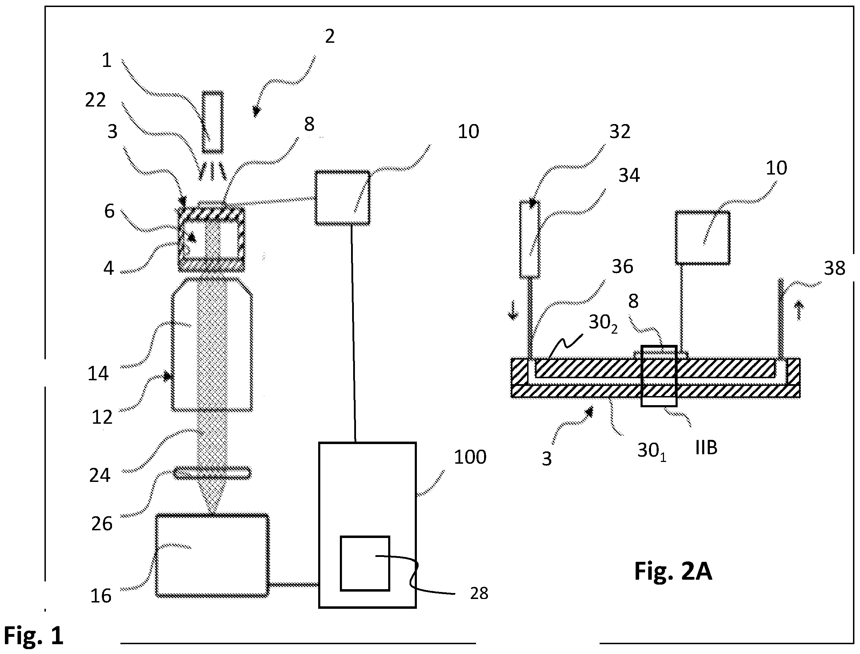

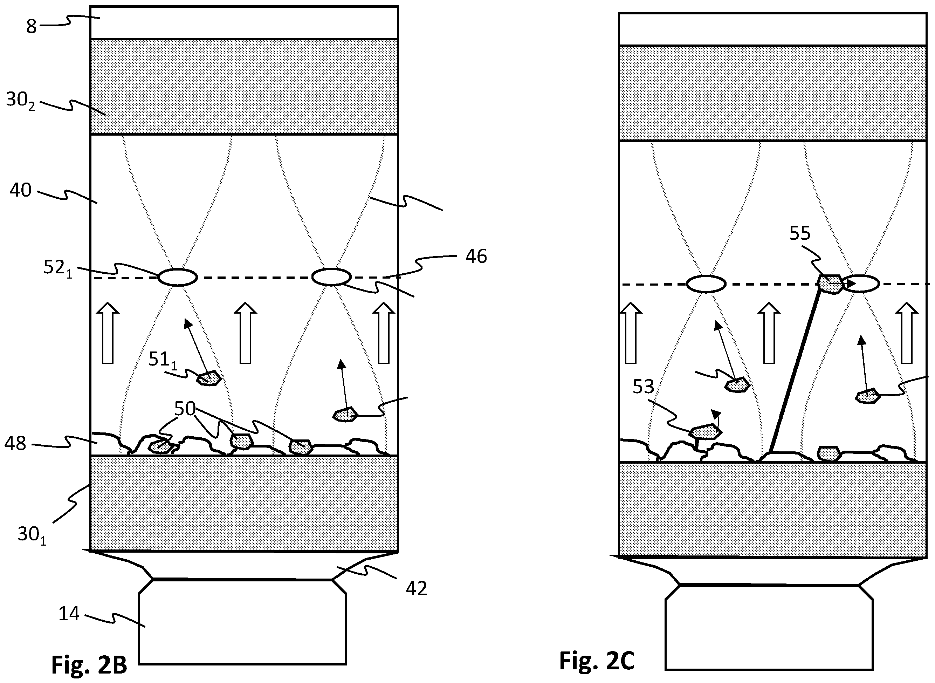

In the figures, identical reference numbers indicate identical or similar elements. **Fig. 1** is a schematic drawing of an embodiment of an acoustic force spectroscopy AFS system 2 that can be used with the embodiments described in this application. **Fig. 2A** depicts a cross section of a sample holder and **Fig. 2B** illustrates a detail of the sample holder of **Fig. 2A** as indicated with "IIB". The system 2 comprises a sample holder 3 comprising a holding space 4 for holding a sample 6 comprising one or more biological cellular bodies 51 in a fluid medium 40 as exemplary cellular bodies of interest.

At the beginning of a measurement the cellular bodies are typically attached to the functionalized wall surface. The holding space 4 may be part of a flow cell (also referred to as a microfluidic cell). The system 2 may comprises a force generator 8 for providing a force to the one or more cellular bodies in the holding space 4. The force generator, in an embodiment, may be an acoustic wave generator based on a piezo element, connected to the sample holder 3 for generating a bulk acoustic wave in the holding space 4 so that a force is exerted on cellular bodies that may be present in the holding space 4. The force field generator 8 may be connected to a controller 10, which may be connected to a data processing system 100 as described herein, so that the force exerted on the cellular bodies can be controlled.

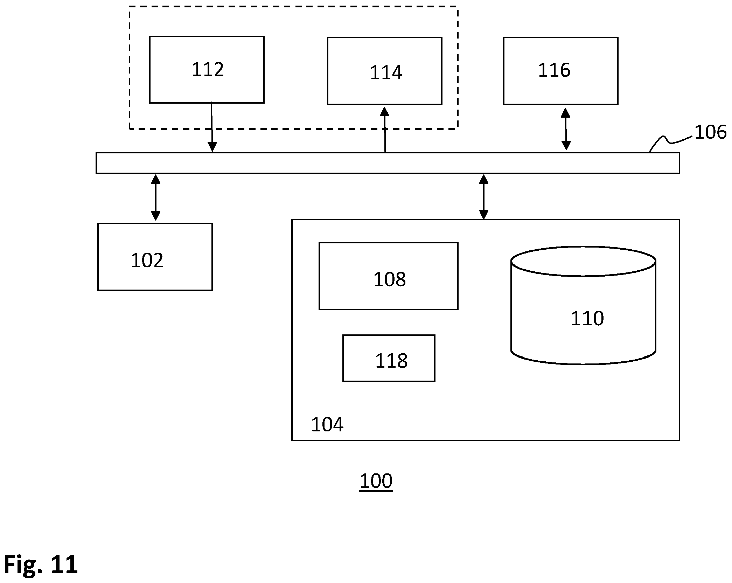

Further, the depicted system may comprise an imaging system configured to capture images of the one or more cellular bodies in the holding space 4. The imaging system may include a microscope 12 including optics, e.g. adjustable objective 14, and a camera 16 for capturing images, e.g. video frames, of the processes in the holding space 4. The imaging system may be connected to the data processing system 100 that is configured to perform any of methods, in particular the image analyses, as described in this application. The data processing system may also be configured to control any of the elements of the depicted system, such as the controller 10 and thus the force generator, and one or more, e.g. all, elements of the imaging system, which are further described below. An embodiment of the data processing system 100 is described in more detail with reference to figure 11 below.

The imaging system may comprise a light source 1 for illuminating the sample, including the functionalized wall surface described herein, using any suitable optics (not shown) to provide a desired illumination intensity and intensity pattern, e.g. plane wave illumination, Köhler illumination, etc., known per se. Here, the light 22 emitted from the light source 1 may be directed through the force field generator 8 to (the sample in) the sample holder 3 and sample light 24 from the sample is transmitted through the objective 14 and through an optional tube lens 26 and/or further optics (not shown) to the camera 16. The objective and the camera may be integrated. In an embodiment, two or more optical detection systems, e.g. with different magnifications, may be used simultaneously for detection of sample light, e.g. using a beam splitter.

In another embodiment, not shown but discussed in detail in WO2014/200341, the system 2 may comprise a partially reflective reflector and light emitted from the light source is directed via the reflector through the objective and through the sample, and light from the sample is reflected back into the objective, passing through the partially reflective reflector and directed into a camera via optional intervening optics. Further embodiments may be apparent to the reader.

The sample light 24 may comprise light affected by the sample (e.g. scattered and/or absorbed) and/or light emitted by one or more portions of the sample itself e.g. by chromophores/fluorophores attached to the cellular bodies.

Some optical elements in the imaging system may be at least one of partly reflective, dichroic (having a wavelength specific reflectivity, e.g. having a high reflectivity for one wavelength and high transmissivity for another wavelength), polarization selective and otherwise suitable for the shown setup. Further optical elements e.g. lenses, prisms, polarizers, diaphragms, reflectors etc. may be provided, e.g. to configure the system 2 for specific types of microscopy.

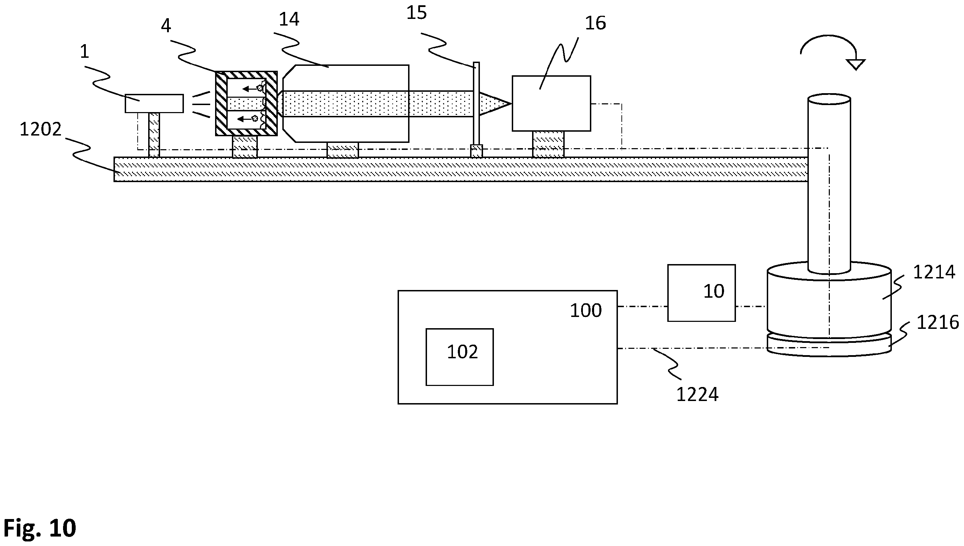

The sample holder 3 may be formed by a single piece of material with a channel inside, e.g. glass, injection moulded polymer, etc. (not shown) or by fixing different layers of suitable materials together more or less permanently, e.g. by welding, glass bond, gluing, taping, clamping, etc., such that a holding space is formed in which the fluid and functionalized wall surface are contained, at least for the duration of an experiment. While, the system of Fig. 1 includes an acoustic force generator, other ways of applying a force on the cells may be used as well. For example, a system that uses a centrifugal force generator for applying a force on the cells is described in more detail with reference to Fig. 10. Since the system of figure 1 is configured to apply a force in a controlled manner, by means of the force generator, the system may also be referred to as a force spectroscopy system.

With the system depicted in figure 1, a force can be applied to one or more cellular bodies in the holding space for separating at least some of the one or more cellular bodies from the functionalized wall surface. Then, the imaging system can be used to capture a sequence of images from the one or more cellular bodies while said force is applied. Based on the obtained images, the interaction between the one or more cellular bodies and functionalized wall surface can be determined in accordance with any of the methods described herein.

Fig. 2A- 2C schematically depict cross-sectional views of a sample holder according to an embodiment. In the depicted embodiment, the sample holder is a so-called flow cell. The sample holder 3 may comprise a first base part 30₁ that has a recess being, at least locally, U-shaped in cross section and a cover part 30₂ to cover and close (the recess in) the U-shaped part providing an enclosed holding space in cross section.

Further, the sample holder 3 may be connected to a fluid flow system 32 for introducing fluid and unbound cellular bodies, such as cells, into the holding space of the sample holder 3 and/or removing fluid from the holding space, e.g. for flowing fluid through the holding space (see arrows in Fig. 2A depicting the flow direction). The fluid flow system may be comprised in or part of a manipulation and/or control system including one or more of reservoirs 34, pumps, valves, and conduits 36,38 for introducing and/or removing one or more fluids, sequentially and/or simultaneously. The sample holder 3 and the fluid flow system 32 may include connectors, which may be arranged on any suitable location on the sample holder, for coupling/decoupling. The sample holder may further include a force field generator 8, e.g. an acoustic wave generator which may be implemented based on a (at least partially transparent) piezoelectric element connected to a controller 10.

Fig. 2B schematically depicts a cross-section of part of the sample holder including objective 14 that is positioned underneath part of a sample holder (a chip) wherein the sample holder may comprise a capping layer 30₁, a matching layer 30₂, a fluid medium 40 contained in the holding space formed by the capping and the matching layer, and part of a force generator 8, e.g. a piezo element. An immersion liquid 42 between the objective and the capping layer may be used to improve the optical numerical aperture (NA) of the imaging system. Application of an AC voltage to the piezo element at an appropriate frequency will generate a resonant bulk acoustic standing wave 44 in the sample holder. The standing wave may have a nodal plane 46 in the fluid layer at a certain height above the functionalized wall surface 48 formed on the wall of the sample holder. Cellular bodies 50 are bound to the functionalized wall surface 48. The standing wave may also have lateral nodes 52_{1,2}. Cellular bodies that have a positive acoustic contrast factor with respect to the fluid medium will experience a force towards to the nodes.

One or more software programs that run on the data processing system 100 of the system may be configured to control the camera, the force field generator and the flow cell to conduct different experiments. In a typical experiment, cellular bodies, e.g. effector cells, may be flushed into the holding space of the flow cell and may interact, e.g. bind, with elements provided on the functionalized wall surface, such as target cells or antigens. This interaction can be probed by analyzing the response of cellular bodies that are bound to the functionalized wall surface as a function of the applied force. As shown in the figure, an acoustic force is applied perpendicularly to the cellular bodies bound to the functionalized wall surface (indicated with upward open arrows) and one or more cellular bodies may detach from the target cells and migrate to the acoustic node at a certain applied force (migration vectors for the cellular bodies are indicated with solid black arrows in Figs. 2B and 2C). This way, detachment events for different cellular bodies 51_{1,2} may occur wherein the detachment events are associated with different applied forces. During the ramp force, the spatiotemporal response of the cellular bodies is captured by the imaging system as described with reference to Fig. 1. By analyzing the video frames, also referred to as images, information about interaction between cellular bodies, e.g. effector and target cells, can be determined. To that end, the data processing system, also referred to as the computer, may include an image processing module comprising one or more image processing algorithms for analyzing the response of the cells when they are manipulated in the flow cell using the force field generator. The image analysis of the video frames is described hereunder in greater detail.

Fig. 2C schematically depicts a cross-section of part of the sample space that is similar to the one of Fig. 2B. In this case however, when a force is applied to the cellular bodies, some of the cellular bodies may move away from the functionalized wall surface but not fully detach from the surface. As shown in Fig. 2C, depending on the circumstances and the experiment different types of cell behaviour may occur. A first example may include the formation of a so-called tether cell 55, wherein a cell will move away from the wall surface due to the applied force but will still be attached to the wall surface by a tether (e.g. a membrane tube). The tether may increase in length during the application of the force. The tether will impede or at least slow down the movement of the cell towards the acoustic node. Thus, during imaging of the holding space, such events will be visible as a cell that moves slower towards a node that fully detached cells. In some cases, if the tether reaches a certain maximum length and/or if the force reaches a certain value, the tether may break and the cell may become fully detached. At that moment, the cell may start moving faster towards the acoustic node. A second example is the formation of a so-called hinge cell 53. During the application of a force, such cell will slightly displace away from the wall surface, but will be kept connected at one point with the target cell. The connection point does not coincide with the centre of gravity of the cell so that the cell will start to rotate (indicated with the curved arrow). Hence, the connection point will function as a "hinge" that causes the cell to slightly displace and rotate when a force is applied. Thus, during an AFS experiment different cells can be classified, including:
1) detached cells, which start to move unhindered towards an acoustic node after a certain force is applied
2) fixed cells which do not move substantially moving substantially during the entire experiment;
3) hinge cells, which start moving a little bit close to their incubation site while still (at least partly) bound. For example, cells that are bound to the monolayer with a small part of their surface (but not directly below the center of the cell), allowing them to hinge about the connection point when a force is applied perpendicular to the functionalized wall surface. Hinge cells can either stay bound, form tethers or fully detach at some moment in the experiment; and
4) tether cells, which move away from their incubation site and extend an elongated tube of cell membrane from the functionalized wall surface.

For both hinge cells and tether cells it may be preferred not to count them as detached and/or to not count the force at which the cell first moves as a detachment force because the underlying bond at the cell-cell attachment focus has not ruptured at the moment of first movement of the cells. This way, parameters like avidity curves may be improved by not counting these events or by classifying them differently.

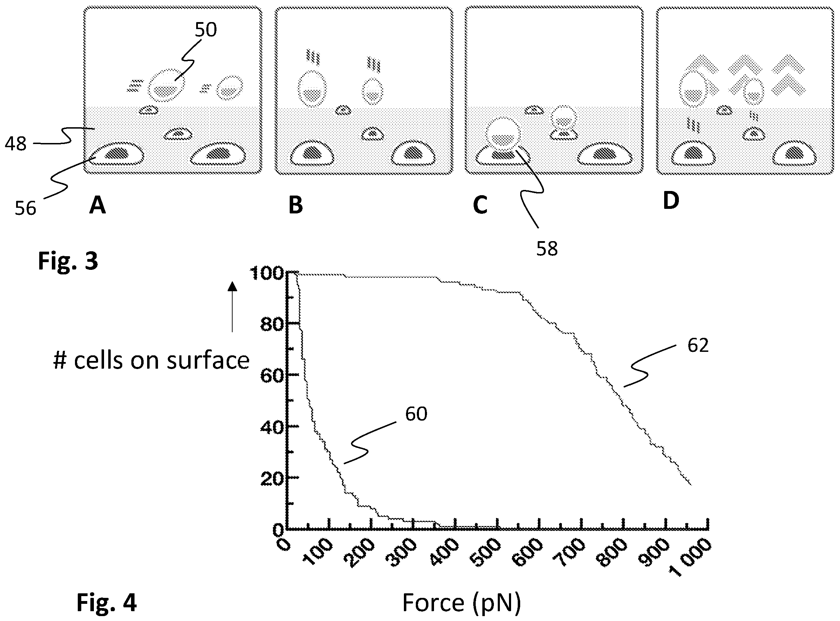

Fig. 3A-3D depict schematics of processes occurring in a holding space, e.g. of a microfluidic cell, of an AFS system, wherein the holding space may comprise a functionalized wall surface that is configured to bind cellular bodies. To this end, the functionalized wall surface may comprise target cells. The holding space may be part of an AFS system as described with reference to Fig. 1 and 2. The processes in the holding space may be imaged from below or from the top using an imaging system, e.g. as described with reference to Fig. 1. As depicted in Fig. 3A, the process may start with flushing cellular bodies 50, e.g. effector cells, into the holding space, comprising a functionalized wall 48 including target cells 56. The introduction of the cells 50 into the holding space may take a predetermined period of time, e.g. between 1 and 5 seconds. After flushing, the cells are allowed to settle onto the functionalized wall 48 comprising the target cells 56 (Fig. 3B). When the cellular bodies reach the functionalized wall, the cells may move around over the functionalized surface until they bind to a location on the surface, for example until they find a suitable target cell to bind to (surveillance) thus forming a bound effector - target cell pair 58 (Fig. 3C). The steps of effector cells settling onto the functionalized wall and binding to it may be referred to as the incubation phase. In a typical experiment, incubation may take up to 1-15 minutes or longer.

The incubation phase may be imaged and when the cells are introduced into the holding space and move towards the functionalized wall, groups of pixels representing cells in the captured images may be detected and tracked. After the incubation phase, a force may be applied to the cellular bodies 50 that are bound to the functionalized wall surface. The force may have a direction away from the functionalized wall surface, e.g. substantially perpendicular to the functionalized wall surface. Typically, a force ramp will be applied to the cellular bodies, so that if the force becomes larger than a binding force, they will start to move away from the functionalized wall surface in the direction of the force (Fig. 3D).

When the force is sufficiently large, a cellular body will move away from the functionalized wall surface in a direction that depends on the applied force, which may have an axial component perpendicular to the functionalized wall (e.g. the z-direction) and two lateral components in the plane of the functionalized wall (e.g. the x and y direction). As discussed with reference to Fig. 2B and 2C different types of spatio-temporal cell movement may be observed which includes detachment events, i.e. events wherein a cell fully detaches from a target cell, without being affected by the formation of a tether or a hinge. The time at which these events occur may determine the force that is exerted on the effector cells. In a typical experiment, the force ramp may take between 2 - 10 minutes, but it can also be shorter or longer.

Based on a measurement scheme as described with reference to Fig. 3, various parameters of the cellular bodies can be determined. For example, Fig. 4 depicts two cell avidity curves which may be determined by applying a force ramp to the functionalized wall surface and determining the number of attached cellular bodies as a function of the applied force. Based on the type of cellular bodies, and based on target cells, or other elements such as antigens, provided on the functionalized wall surface, cellular bodies may exhibit a low cell avidity curve 60 (weak binding forces between effector and target cells) or a high cell avidity curve 62 (strong binding forces between effector and target cells).

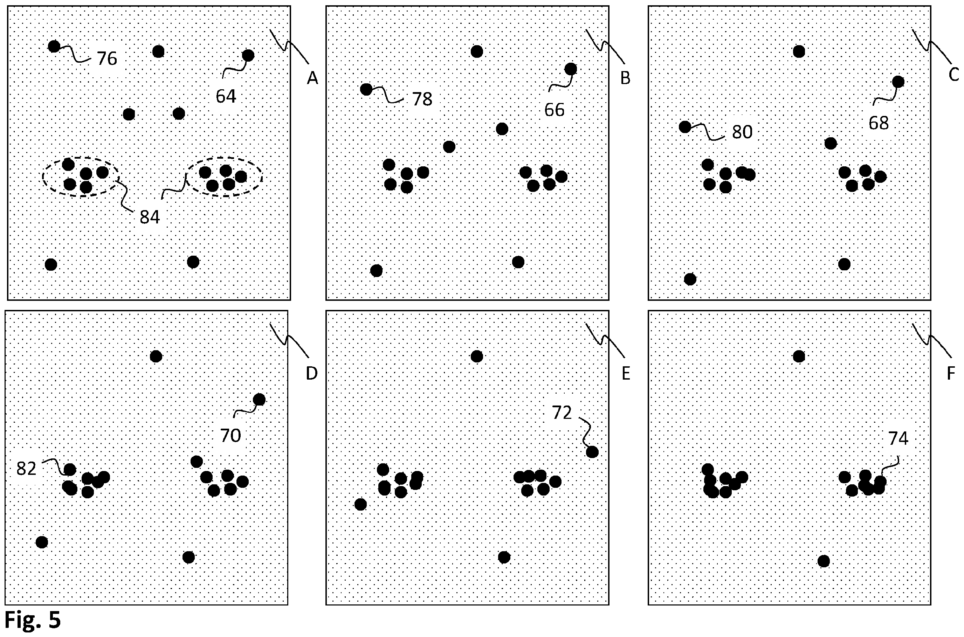

Figure 5 schematically illustrates a sequence of images A-F representing several cellular bodies in the holding space. The images, which may also be referred to as video frames that constitute a video, are each associated with a respective time instance. Preferably, each image is associated with a state of the force generator that is used to apply a force to the cellular bodies and/or with a force applied to the cellular bodies. A state of the force generator may for example indicate a value of angular velocity if the force generator is a centrifuge system. Alternatively, the state of the force generator may indicate the frequency and/or amplitude at which piezo element of an acoustic wave generator vibrates. Typically, the state of the force generator is monitored over time, which allows to determine for each image the corresponding state or force based on the time instance associated with the image in question. It is submitted that the images in these figures are simplified for clarity. In real experiments the images may include hundreds or even thousands of cells.

The cellular bodies are schematically depicted as black solid circles in the images. The cellular bodies are typically represented by pixel groups formed by pixels having a value that distinguishes them from pixels representing background, e.g. representing the functionalized wall surface. In an embodiment, pixels in the pixel groups representing the cellular bodies for example have a relatively high intensity. For example, cellular bodies may have been fluorescently labelled which may have caused the cellular bodies to light up against a dark background upon appropriate illumination. In another embodiment, a pixel group may have a particular features, e.g. shape and/or size, that matches features of a cellular body.

Each black solid circle in the images A-F may be understood to be a pixel group as referred to in this disclosure. To illustrate, 64 indicates a pixel group in image A, 66 indicates a pixel group in image B, 68 indicates a pixel group in image C, 70 indicates a pixel group in image D, 72 indicates a pixel group in image E, 74 indicates a pixel group in image F. Further, these pixel groups 64 - 74 represent the same cellular body. As such, these pixel groups 64 - 74 represent a movement of the cellular body relative to the sample surface. Similarly, pixel groups 76, 78, 80, 82 in respective images A, B, C, D, represent a movement relative to the functionalized wall surface of another cellular body represented in the sequence of images.

The images show that there are two clusters of cellular bodies, indicated by 84 in image A. These clusters may be formed by a standing acoustic wave generating a force that directs all separated cellular bodies to a node of the acoustic wave. This causes the cellular bodies to accumulate in regions 84. During an experiment more and more cellular bodies typically separate from the functionalized wall surface, for example due to the force applied to the cellular bodies increasing. This may result in more and more accumulation in the cluster regions. 84.

Image A may be understood to be an initial image, at least for the cellular body represented by pixel group 76 and the cellular body represented by pixel group 64 in the sense that these cellular bodies are bound to the functionalized wall surface and/or in the sense that they at the same position as they were before any force was applied to the cellular bodies, i.e. they have not moved yet during the experiment. Pixel group 76 thus defines an initial location for one cellular body and pixel group 64 another initial location for another cellular body. In fact, it can be assumed for clarity in the explanation here that each cellular body that is not in a cluster 84 at the time image A was captured is at its initial position, i.e. has not moved since the beginning of the experiment.

The pixel groups representing cellular bodies at their initial position may be detected based on the aberrant values of their pixels relative to the values representing a background of the image, e.g. representing the functionalized wall surface.

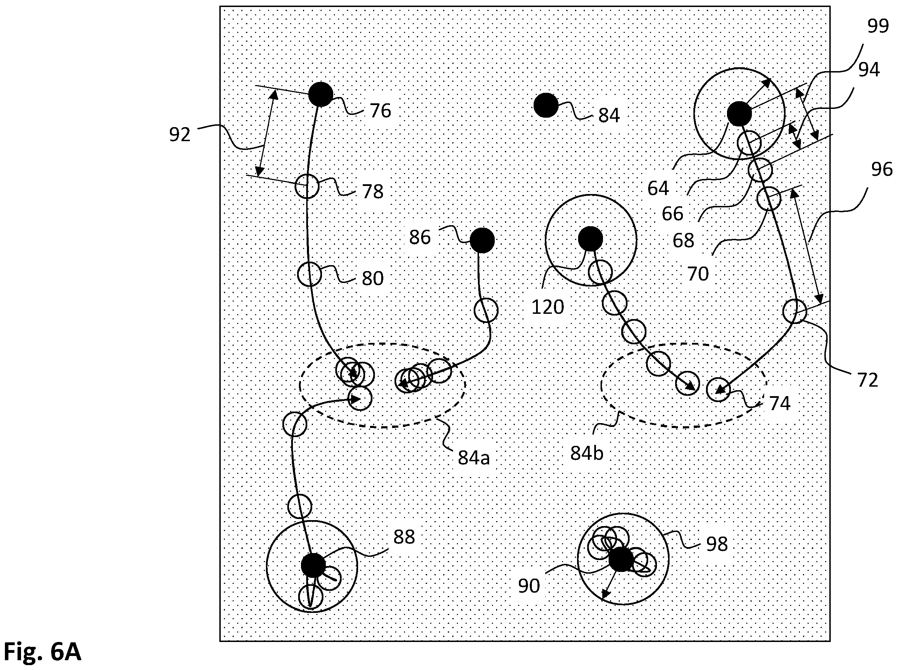

Figure 6A is a combined image in which all pixel groups representing cellular bodies in images A-F are indicated. For clarity, the cellular bodies that were already present in the clusters 84 are not shown. This combined image clearly shows how pixel groups represent a movement of a cellular body. To illustrate, it was noted already that pixel groups 76, 78, 80 represented the same cellular body. In figure 6A, these pixel groups are indicated and connected by a line, which may be referred to as a tracking path. The tracking path, a trajectory of the moving cellular body through the holding space, thus indicates how the cellular body moved during the time period covered by images A-F, e.g. the time period of the force ramp. Likewise, pixel groups 64, 66, 68, 70, 72 and 74 also represent the same cellular body.

The speed of a cellular body moving along its path can be determined based on the distance between "adjacent" pixel groups on the path. To illustrate, the speed - at the beginning of the experiment - of the movement of the cellular body represented by pixel group 76 can be determined based on the distance 92 and the time difference between the time instance respectively associated with image A and image B. The distance may be expressed as a pixel distance, for example may be 3.6 pixels. The speed determined in such manner may be compared to a threshold speed. In an embodiment, the speed of cellular body represented by pixel group 76 is higher than this threshold. Based on this determination, it may be determined that this cellular body has detached from the functionalized wall surface.

Cellular body represented by pixel group 90 in image A is different in that sense. As can be seen from the figure, this cellular body has moved, yet at relatively low speed. Again, this speed may be compared, in an embodiment, to a threshold value, preferably the same threshold value as above, and it may be determined that this cellular body is still attached to the functionalized wall surface. Even further, it can be seen that this cellular body does not move further from its initial position, indicated by pixel group 90 (the solid circle) than a threshold distance. The threshold distance is indicated by circle 98. Based on determining that this cellular body has not travelled further than this threshold distance, it may be determined that this cellular body is a hinged cell, meaning that it is tightly attached to the functionalized surface at a point which is displaced laterally with respect to the center of mass of the cellular body in relation to the direction of the applied force.

Cellular body represented by pixel groups 64 - 74 is also different. Up until image D (pixel group 70), the speed is relatively low, in this example lower than the threshold speed. Based on determining that the speed of the movement is lower than the threshold speed, it may be determined that this cellular body is attached to the functionalized wall surface, at least up until the time instance associated with image D. Even further, it can be seen that in image C (pixel group 68) this cellular body has travelled a distance 99 from its initial position 64. This distance may be determined and it may be determined that this distance 99 exceeds the threshold distance indicated by the circle around pixel group 64. Based on the latter determination, it may be determined that this cellular body is attached to the functionalized wall surface by means of a tether, such as a membrane tube, at least up until image D (pixel group 70).

After image D, the speed of the movement of cellular body represented by pixel groups 64-74, suddenly increases. This speed may be determined based on distance 96 and on the time difference between the time instances associated respectively with images D and E. As a side note, the time difference between two subsequent images is typically constant and related to a so-called frame rate of the imaging system. The speed of this "further movement" of the cellular body exceeds the threshold speed. Based on determining that this is indeed the case, it may be determined that the cellular body has detached from the functionalized wall surface.

Typically, the speed of a cellular body throughout a video is constantly monitored so that it can be determined easily when exactly the speed exceeded the threshold speed. This may provide valuable information, for example at which forces and/or at which distances from its initial position and/or at which state of the force generator the cellular body separated from the functionalized wall surface.

In an embodiment, the method may then comprise determining detachment images which are the earliest images in the sequence of images that comprise pixel groups representing a speed of movement of the first cellular body that is higher than said threshold speed. In the above example, the detachment images would then be image D (pixel group 70) and image E (pixel group 72), because these images are the first images in the video based on which the determined speed exceeds the threshold speed. As time of detachment a time between time instance associated with image D and time instance associated with image E may be selected. Alternatively, the time instance of image D or E may be regarded as time of detachment.

Cellular body represented by pixel group 84 in image A does not move in the sequence of images A-F. Hence, it may be determined that this cellular body is attached to the functionalized wall surface.

Cellular body represented by pixel group 88 in image A can first, based on images A, B, C be determined to be attached to the functionalized wall surface, in particular as a hinged cell. However, the speed determined based on images D and C, in this example, exceeds the threshold speed. Hence, it may be determined that this cellular body has detached from the functionalized wall surface.

A cellular body classified as hinge cell may move faster than a certain threshold th1 and less than a second threshold th2 (e.g. indicated as 98 in 6A). A cellular body that moves less than th1 may be classified as an attached cell (e.g. 84) and may at a later stage turn into a cell detaching directly (such as 76->78 and 86) or it may become a hinge or tether cell.

Cellular body represented by pixel group 86 immediately travels at a speed higher than the threshold speed to cluster area 84a. Hence, it may be determined as detached from the functionalized wall surface.

Cellular body represented by pixel group 120 in image A travels at relatively low speed, and further than the threshold distance. Hence, this cellular body may at first be classified as a tethered cellular body. However, the cellular body in image E has reached a cluster 84b. Based on determining that this is the case, this cellular body may be disregarded in the experiment, for example by refraining from classifying the cellular body as detached from or attached to the surface.

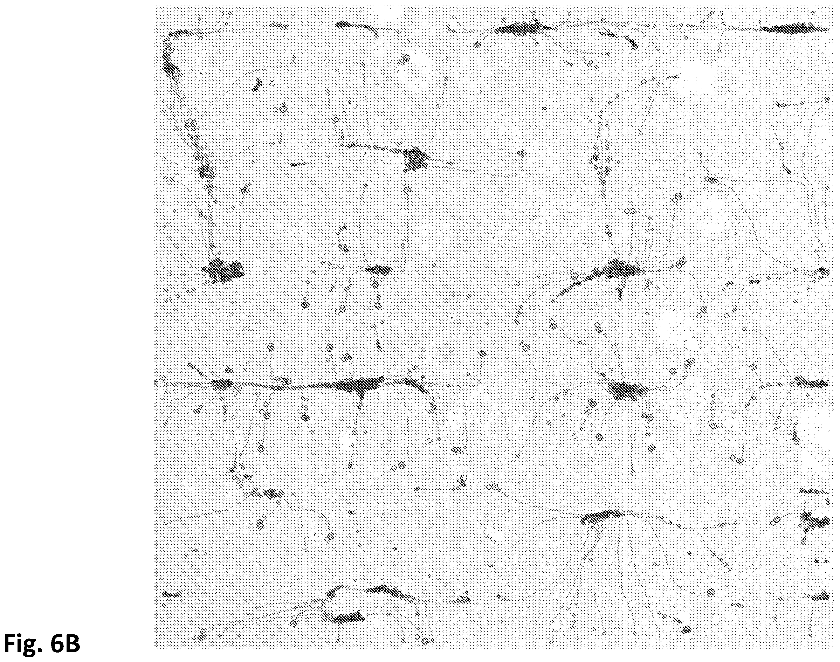

Figure 6B depicts an image taken by a camera of an acoustic force spectroscopy system which is analyzed using an image processing algorithm. As shown in this video image, tracking paths are identified. The tracking paths are determined by tracking detected cellular bodies in multiple images. The paths show that cells are accumulated in positions of acoustic nodes that exist when the force generator of the AFS system is switched on.

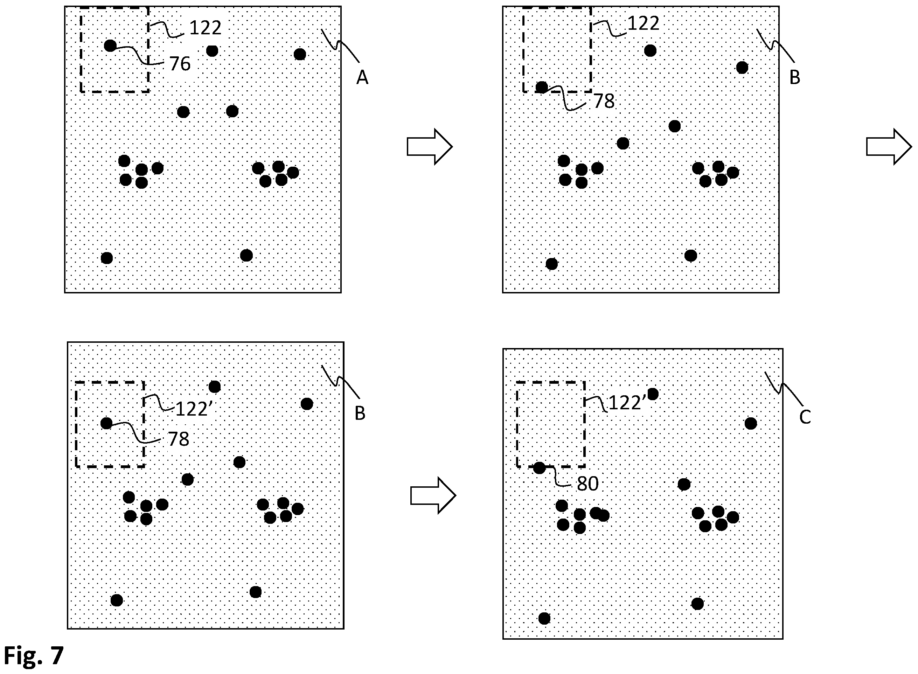

Figure 7 illustrates how tracking pixel groups representing a movement of a cellular body may be performed. In the depicted example, pixel groups 76, 78 and 80 are detected. First, pixel group 76 may be detected in image A based on aberrant pixel values with respect to background pixels. Then, a region of interest ROI 122 may be determined that comprises pixel group 76. In an embodiment, the region of interest may have pixel group 76 at its center. Region of interest also comprises pixels surrounding pixel group 76 in this example.

Then, the same region of interest 122 is analyzed in image B, i.e. an image subsequent to image A. It is then found that pixel group 76 no longer has aberrant pixel values, yet only pixels representing background. In an embodiment, the method comprises identifying pixels in region of interest 122 in image B that do have pixel values that distinguish them from pixels representing background. In this example, pixels at the bottom of region interest 122 in image B are identified.

Then, based on these identified pixels, pixel group 78 may be determined. This may comprise identifying all pixels that are adjacent the identified pixel at the bottom of region interest 122, which also have values distinguishing them from the background. Then, pixel group 78 in image B may be determined to represent the same cellular body as pixel group 76 in image A.

Then, as shown in image B at the bottom left of figure 7, the region of interest may be updated, e.g. shifted, in order to obtain an updated region of interest 122'. Preferably the updated region of interest 122 has pixel group 78 at its center.

Subsequently, this updated region of interest 122' can be analyzed in a further subsequent image C and again pixels can be identified having aberrant values. These pixels may be determined to also represent the same cellular body that is tracked. Again, based on the identified pixels in the updated region of interest 122' in image C, a pixel group 80 in image C can be determined to represent the same cellular body.

These steps may be repeated, which results in the tracking of a cellular body throughout the video wherein the locations of the cellular body in subsequent images may form a trajectory of the cellular body moving in the flow cell due to the applied force.

It should be understood that sometimes the cellular body moves so fast that its movement cannot be tracked, which may result in a tracking error. This may also be dependent on the size of the region of interest that is chosen. It should be appreciated that determining the speed of the movement of a cellular body may be performed by determining that a cellular body cannot be tracked. This may namely be understood to be determining the speed in the sense that it is determined that the speed is higher than the maximum speed at which a cellular body can be tracked.

Another tracking mechanism for tracking cellular bodies that may be used may be based on a global minimization of distances between pixel groups representing cellular bodies in subsequent images. This may allow tracking of faster cellular bodies or tracking using smaller regions of interest.

Below, a pseudo-code is provided that illustrates a tracking method according to an embodiment that is based on a similarly score, e.g. the so-called structural similarity index measure (SSIM) score. The SSIM score is well is known in the art, see for example the article by Wang et al, 2004-04-01). "Image quality assessment: from error visibility to structural similarity". IEEE Transactions on Image Processing. 13]). The SSIM comparison yields a score of 0 for no structural similarity and 1 for identical images.

### Initialize ROIs and create reference ROI images for SSIM algorithm:

### For a first image in the image sequence

*1. Fixed tracker (ROI size* = *12×12 pixels )*
   *2. Select particles at locations*
   *3. Initialize selection ROI images at selection locations*
   *4. Fixed tracker ROI ref images = selection ROI images*
*5. Moving tracker (ROI size = 30x30 pixels)*
   *6. Initialize moving tracker ROIs at selection locations*
   *7. Moving tracker ROI ref images* = *ROI image composed of a constant image median value*

### For all images in the sequence of images:

### For all cellular bodies:

***Run fixed ROI tracker:***
   *8. Compute ROI features: SSIM score, mean intensity*
   *9. Fixed tracker presence state* = *Fixed tracker SSIM score* > *0.2*
***Run moving ROI tracker:***
   *10. If Moving tracker presence* == *True: (True means present, False means detached*/*not present)*
   *11. Compute center of mass (COM) and update ROI location*
   *12. Compute Features: SSIM score, mean intensity, distance from selection location and traveling speed*
   *13. Moving tracker presence state = (Moving tracker SSIM score* < *0.85) and (velocity < 16 pix*/*s)*

### Classify cellular body type (normal cell, hinge cell, tether cell, cluster error):

*14. If (fixed tracker presence state* == *False for last 4*framerate frames) AND (moving tracker presence state* == *True): Hinge cell*
*15. If Hinge cell AND distance from selection location > 30 pixels: tethered cell*
*16. If moving ROI tracker ROI mean > 1.5 x selection ROI image mean: Cluster error (cellular body in cluster)*
*17. Else: normal cell*

### Classify cellular body presence based on cellular body type and presence results of the 2 trackers:

*18. If normal cell: presence = fixed ROI tracker presence*
*19. If cluster error: exclude cellular body*
*20. If other cellular body type: presence = moving tracker presence*

### After last frame:

### Filtering of cellular bodies based on cellular body type:

### 21. Filtering of cells based on cellular body type

In step 1 of the code, the size of a region of interest (ROI) of a so-called "fixed tracker ROI size" parameter is set to a size of 12x12 pixels. This parameter defines the size of the area that will be used to track a cell. In step 2, the initial locations of detected cellular bodies that are bound to the functionalized wall of the flow cells are determined using a known image recognition algorithm (such as template matching or a blob selection method). In step 3, ROIs in an initial image which represent cellular bodies, are initialized at the locations determined in step 2. These ROIs comprise the pixel groups representing respective cellular bodies. An initial image may depict the situation at the beginning of an experiment when no force is actively applied to the cellular bodies. In step 4, the identified pixel groups, i.e. the cellular bodies, in the initial image are stored as ROI reference images. Thus, each cellular body is associated with its own ROI, a fixed ROI location within the image, and a ROI reference image.

In step 5, the so-called "moving tracker ROI size" is set to a predetermined size, e.g. 30x30 pixels. In step 6, the moving tracker ROIs are initialized at locations found in step 2. In step 7, the moving tracker ROI ref images are defined. This reference image that is used by the moving tracker may comprise pixels that have the same pixel value. In an embodiment, this pixel value may represent a median value of all pixel values in the initial images. In this manner, the moving tracker reference image is a homogeneous image having pixel values that are similar to the pixel values of the background of the image, e.g. similar to the functionalized wall surface. Thus, each cellular body is additionally associated with its own moving tracker ROI, moving tracker ROI location, and moving tracker ROI reference image.

Steps 8-20 are performed for all or at least a substantial part of the cellular bodies in the video frames. Steps 8 and 9 relate to the fixed tracker, which is configured to determine whether a cellular body is positioned at its initial position or not. In step 8, a similarity score, such as an SSIM score, may be determined based on the fixed tracker reference image for a cellular body in question and the fixed ROI of the image in question. If the similarity score is higher than a predetermined threshold, 0.2 in this example, then a Fixed tracker present state = True, meaning that the cellular body has not moved (significantly) from its initial position (see step 9).

Steps 10-13 relate to a so-called "moving ROI tracker" algorithm which is configured to track a cellular body as it moves relative to the functionalized wall surface. The algorithm may be configured to determine if a pixel group representing a cellular body is still present inside the moving ROI and compute the current location of the determined pixels group. Steps 11-13 are performed while Moving tracker present state is true. In step 11, the center of mass is determined of the pixel group representing the cellular body in question in the frame in question and the ROI position is updated. This may be performed as described with reference to figure 7. Then, in step 12, a similarity score, such as a SSIM score, may be determined on the basis of the ROI in the image in question and the reference image for the moving tracker, e.g. the homogeneous reference image similar to the background described above. If the similarity score is lower than a predetermined threshold, 0.85 in this example, then the algorithm can still track the cellular body. If this score becomes too high, it means that the updated ROI resembles the background too much meaning that the cellular body has disappeared and can no longer be tracked. Further, a speed is determined of the movement of the cellular body, e.g. based on the current image and one or more preceding images, e.g. based on the current image and the n number of preceding images. The determined speed is compared with a threshold speed, 16 pixels per second in this example. In step 13, if both the moving tracker can still track the cellular body and the speed is lower than the threshold speed, the Moving tracker present state = true.

Steps 14-17 relate to the classification of the cellular body. This classification may be performed for each cellular body, in each frame of the video. In step 14, if both the fixed tracker presence state has been false for at least a number of frames, for example 4*framerate (i.e. for four seconds in reality), and if the moving tracker presence state is true, then the cell is preliminary classified as a hinge cell. In step 15, it is further checked whether the distance from the initial position for the cellular body in question exceeds a predetermined threshold, 30 pixels in this example. If this is the case and if the cellular body was preliminary classified as hinge cell, then, the cellular body is classified as a tethered cellular body. In step 16, it is checked whether the cellular body has reached a cluster. The algorithm may check this based on an intensity value. In this example, if the pixels values of the updated ROI have a higher mean intensity than 1.5 times the initial ROI, then a cluster error is determined. In step 17, if the cellular body has not been classified in any of steps 14, 15, 16, then it is classified as a normal cellular body.

In step 18, a presence of a normal cellular body is determined to be given by the fixed ROI tracker presence. Thus, if the value for the fixed ROI tracker is true, then the cellular body has not moved and may be counted as a cellular body that is still attached to the functionalized wall surface. In step 19, cellular bodies in clusters are excluded. These cellular bodies are not counted as attached nor as attached. In step 20, the presence of hinge cellular bodies and tethered cellular bodies is given by the moving tracker presence.

Finally, in step 21, which is performed after all frames have been analyzed, cellular bodies are filtered based on type - normal, hinge, tether. Since the type for a cellular body may be updated, and thus changes, in each new frame, it should be understood that the type based on which the cellular bodies are filtered after the experiment may be the type they were last assigned.

By filtering, a user can choose to dismiss for example tethered cellular bodies from an avidity analysis, for example in the sense that they are not counted as detached from the functionalized wall surface. The normal cellular bodies, if their presence is true, may be counted as still attached to the functionalized wall surface. The cluster error cellular bodies may preferably not be counted. The hinge cells may be counted as attached to the functionalized wall surface. The "tether" cellular bodies may be disregarded from an avidity analysis altogether, because, in spite of being still bound to the functionalized wall surface, it is doubtful whether these cellular bodies showed desired binding properties that a researcher is investigating.

It should be appreciated that the above described methods for tracking a cellular body may also be employed for tracking cellular bodies in the initialization images described herein. When a cellular body can no longer be tracked by such tracking algorithm it may be determined that the cellular body has settled onto the functionalized wall surface. In such case, the cellular body may no longer be trackable because, once settled, it may not be distinguishable anymore from the functionalized wall surface.

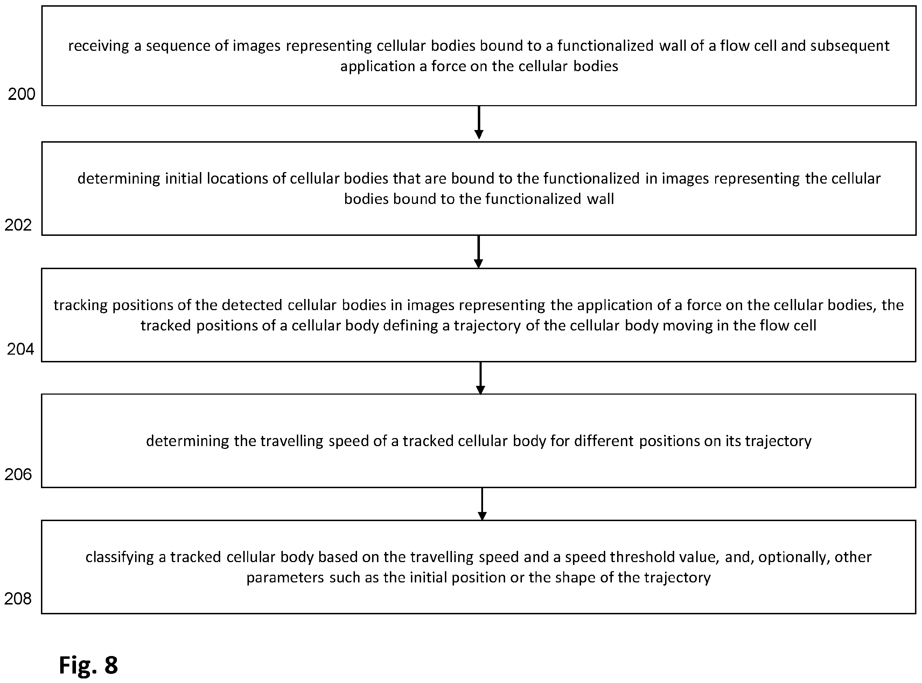

Thus, the above described algorithm and insights allow accurate classification of cellular bodies during force spectroscopy using an AFS system or another suitable force spectroscopy system. Fig. 8 depicts a method of determining interaction between cellular bodies and a functionalized wall surface according to an embodiment of the invention. The method may start with determining or receiving a sequence of images, e.g. a video, captured by a camera of a force spectroscopy system wherein the images represent cellular bodies contacting a functionalized wall of a flow cell, wherein the functionalized wall is configured to bind the cellular bodies. The video represents the dynamics of the cellular bodies, preferably before and during the application a force (which may be a force ramp) on cellular bodies that are bound to the functionalized wall (step 200). The force for may be an acoustic force or another force such as a centrifugal force having a direction away from the functionalized wall.

Before a force is applied to the cellular bodies, initial locations of cellular bodies that are bound to the functionalized may be determined in the sequence of images using well known image recognition techniques (step 202). Thereafter, the positions of the detected cellular bodies are tracked while an increasing force (a force ramp) may be applied to the bound cellular bodies (step 204). The force may cause some of the cellular bodies to be pulled away from the functionalized wall and start moving. The positions in subsequent video frames of a tracked cellular body may define a trajectory of the cellular body moving in the holding space. During the tracking of the position of the cellular bodies in the holding space, the travelling speed of the cellular bodies may be determined and monitored (step 206). The travelling speed of a cellular body at a certain point on the trajectory may be determined based on one or more images that comprise a representation of that cellular body around that point, e.g. two or more earlier video frames.

The tracked cellular bodies may then be classified based on the determined speed (step 208). If the speed at a certain point on the trajectory is larger than a predetermined threshold value, then a cellular body may be classified as a detached cellular body. If the speed at a certain point on the trajectory is smaller than the predetermined threshold value, then the cellular body may be classified as attached (despite the fact that the cellular body is moving). Further, the class of cellular bodies which have a speed larger than zero and which are classified as attached, may be further (sub)classified on the basis of other parameters such as a distance between the initial position and a further position, the shape of the trajectory, or any other suitable parameter or combination of parameters. For example, based on the distance (or another suitable parameter), such cellular body may be either classified as a hinged cellular body or a tethered cellular body.

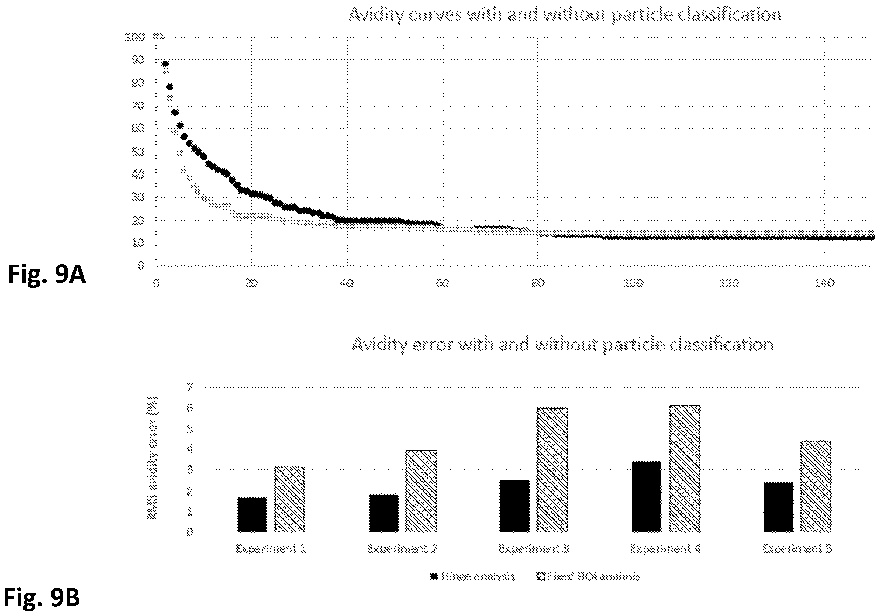

Fig. 9A and 9B depict examples of avidity curves that are determined using the systems and methods described in this application. These figures illustrate some experiments and the differences obtained using a standard analysis in which all moving cells are classified as detached cells and an analysis in which moving cells are tracked and classified based on the speed cells have when they move. In this example, hinge and tether cells are counted as detached on their final rupture moment (e.g. breaking of a tether). As most hinge and tether cells finally fully detach from the surface in this particular experiment, a similar baseline signal of about 12% is reached. The results show that hinge and tether cells can be identified as well as their detachment. This detachment is typically later in the force ramp, resulting in a slower decrease in the avidity curve compared to the standard analysis. The bar graph of Fig. 8B shows the root-mean-square error in the avidity curve compared to manual annotations for several experiments. The RMS avidity error is defined with respect to manual annotations that include hinges and tethers. The annotated detachment times are the times the cell fully detaches (for example breaking of a tether). The RMS error is defined as the square root of the mean (annotated_avidity - test_avidity)².

Fig. 10 schematically depicts a further system according to an embodiment. This system includes a rotary arm 1202 that is rotatable mounted onto a rotor system that includes a rotor 1214 and a rotary joint 1216. A holding space 4, e.g. a microfluidic cell, comprising cellular bodies (e.g. effector cells and target cells attached to a functionalized wall of the holding space) may be mounted onto the rotary arm. Further, a light source 1, an adjustable objective 14, a tube lens 15 and a camera 16 may form an imaging system for capturing images of effector cells interacting with target cells. A rotor controller 10 may be used to control the rotor system to spin the rotary arm in a circular motion so that a centrifugal force is exerted onto the cellular bodies. The system may be connected to a data processing system 100 that includes a processing module 102 that is configured to control the rotor controller and the imaging system. Further, when in use, the data processing system 100 may receive captured images 1224 of the holding space while a force ramp is exerted onto the cellular bodies. Further, the processing module is configured to process the captured images in a similar way as described above. Exemplary embodiments of such force spectroscopy systems are described in WO2017/147398 and US8795143 which are hereby incorporated by reference into this application.

Fig. 11 depicts a block diagram illustrating a data processing system according to an embodiment. As shown in Fig. 11, the data processing system 100 may include at least one processor 102, referred to above as processing module, coupled to memory elements 104 through a system bus 106. As such, the data processing system may store program code within memory elements 104. Further, the processor 102 may execute the program code accessed from the memory elements 104 via a system bus 106. In one aspect, the data processing system may be implemented as a computer that is suitable for storing and/or executing program code. It should be appreciated, however, that the data processing system 100 may be implemented in the form of any system including a processor and a memory that is capable of performing the functions described within this specification.

The memory elements 104 may include one or more physical memory devices such as, for example, local memory 108 and one or more bulk storage devices 110. The local memory may refer to random access memory or other non-persistent memory device(s) generally used during actual execution of the program code. A bulk storage device may be implemented as a hard drive or other persistent data storage device. The processing system 100 may also include one or more cache memories (not shown) that provide temporary storage of at least some program code in order to reduce the number of times program code must be retrieved from the bulk storage device 110 during execution.

Input/output (I/O) devices depicted as an input device 112 and an output device 114 optionally can be coupled to the data processing system. Examples of input devices may include, but are not limited to, a keyboard, a pointing device such as a mouse, a touch-sensitive display, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 9 with a dashed line surrounding the input device 112 and the output device 114). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 116 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 100, and a data transmitter for transmitting data from the data processing system 100 to said systems, devices and/or networks. Modems, cable modems, and Ethernet cards are examples of different types of network adapter that may be used with the data processing system 100.

As pictured in Fig. 9, the memory elements 104 may store an application 118. In various embodiments, the application 118 may be stored in the local memory 108, the one or more bulk storage devices 110, or apart from the local memory and the bulk storage devices. It should be appreciated that the data processing system 100 may further execute an operating system (not shown in Fig. 9) that can facilitate execution of the application 118. The application 118, being implemented in the form of executable program code, can be executed by the data processing system 100, e.g., by the processor 102. Responsive to executing the application, the data processing system 100 may be configured to perform one or more operations or method steps described herein.

In one aspect of the present invention, the data processing system 100 may represent a controller 10 as described herein or a data processing system configured to perform any of the methods described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 102 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art that fall within the scope of the appended claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. Method for determining interaction between cellular bodies (50, 51) and a functionalized wall surface (48), the method comprising:
obtaining, *e.g.* determining or receiving, a sequence of images representing manipulating cellular bodies (50, 51) in a holding space (4), the holding space (4) including a functionalized wall surface (48) configured to bind the cellular bodies, the manipulating including applying a force, preferably a force ramp, on cellular bodies (50, 51) bound to the functionalized wall surface (48), preferably the force having a direction away from the functionalized wall surface (48);
tracking first locations of first pixel groups in respective first images out of the sequence of images, each first pixel group in the first images representing a first cellular body out of the cellular bodies, the first locations in the respective first images defining a first trajectory of the first cellular body moving relative to the functionalized wall surface (48);
determining one or more first speed values of the first cellular body at one or more locations of the first trajectory, the one or more speed values being higher than zero;
**characterised by**
classifying that the first cellular body is attached to the functionalized wall surface (48) based on the one or more first speed values and at least one threshold speed value, preferably the classifying including determining that the one or more first speed values are lower than the at least one threshold speed value.

2. The method according to claim 1, further comprising:
tracking second locations of second pixel groups in respective second images out of the sequence of images, each second pixel group in the second images representing a second cellular body out of the cellular bodies, wherein the second locations in the respective second images define a second trajectory of the second cellular body moving relative to the functionalized wall surface (48);
determining one or more second speed values of the second cellular body at one or more positions of the second trajectory;
classifying that the second cellular body is detached from the functionalized wall surface (48) based on the one or more second speed values and the at least one threshold speed, preferably the classifying including determining that the one or more second speed values are higher than the at least one threshold speed.

3. The method according to claim 1 or 2, further comprising:
tracking third locations of third pixel groups in respective third images out of the sequence of images, the third images being later in the sequence of images than the first images, each third pixel group representing the first cellular body, wherein the third locations in the respective third images define a further part of the first trajectory;
determining one or more further speed values of the first cellular body relative to the functionalized wall surface (48) at one or more points of the further trajectory;
classifying that first cellular body is detached from the functionalized wall surface (48) based on the one or more further speed values, preferably the classifying including determining that the further speed is higher than the at least one threshold speed, or the method according to claim 1 or 2, further comprising:
determining that the first cellular body is located in a cluster, a cluster being an aggregation of cellular bodies, and refraining from classifying the first cellular body in the cluster as attached to the functionalized wall surface (48), wherein determining that the first cellular body sits in a cluster comprises:
determining an intensity of a pixel group out of said pixel groups representing movement of the first cellular body, and determining that the intensity of the pixel group is higher than a threshold intensity, and based on the intensity being higher than the threshold intensity, determining that the first cellular body sits in a cluster, and/or
receiving one or more locations where such clusters are expected and/or identified (e.g. based on close proximity of many cellular bodies) and determining that the cellular body has reached such location.

4. The method according to any of the preceding claims, wherein determining a first speed of the first cellular body at a location at the first trajectory comprises:
determining or receiving time instances associated with two or more images, preferably two or more subsequent images, in which the first cellular body is located at or around one of the one or more locations of the first trajectory; and,
determining the first speed based on the time instances and the locations of the first cellular body in the two or more images.

5. The method according to any of the preceding claims, wherein the sequence of images includes one or more images of the holding space (4) before applying the force to the cellular bodies, the method further comprising:
detecting the location of the first cellular body in at least one of the one or more images of the holding space (4) before applying the force to the cellular bodies, the location defining an initial location of the first cellular body bound to the functionalized wall.

6. The method according to the preceding claim, wherein a distance between the initial location and a further location on the first trajectory and/or a shape of the first trajectory is used to determine that the first cellular body is attached to the functionalized wall surface (48) by means of a tether, such as a membrane tube.

7. The method according to claim 5 or 6, wherein the sequence of images comprises initialization images representing the one or more cellular bodies (50, 51) binding to the functionalized wall surface (48), and wherein detecting a pixel group at an initial location in the initial image comprises:
detecting initialization pixel groups in the respective initialization images, the initialization pixel groups representing an initialization movement of the first cellular body, and
tracking the location of the first cellular body in the initialization images, wherein for each initialization image the first cellular body is classified as being trackable or not trackable by using a region of interest (ROI) algorithm which is configured to track a cellular body as it moves relative to the functionalized wall surface (48), and
determining a settling event if during tracking the first cellular body it is classified as non-trackable, the location in the initialization image at which the settling event is detected defining the initial location in the initial image and thus defining a pixel group at the initial location in the initial image, and wherein
the detected pixel groups in the respective first images are detected at different locations in the respective first images, the different locations forming a tracking path, the tracking starting point of the tracking path defining a pop-up location in a tracking starting image out of the first images, the tracking starting image being associated with a tracking starting time instance, the method comprising
determining the distance between the initial location and the pop-up location, and
determining a time difference between the tracking starting time instance and a force application time instance indicating a time instance at which a force was applied to the first cellular body,
determining a speed based on the time difference between the tracking starting time instance and the force application time instance and on the distance between the initial location and the pop-up location,
determining that this speed is lower than a second threshold speed and/or higher than a third threshold speed, and
based on this determination, determining that the first cellular body is associated with the initial location, *e.g.* determining that the first cellular body is attached to the functionalized wall surface (48) at the initial location.

8. The method according to any of the preceding claims, comprising:
determining detachment images out of the sequence of images, the detachment images being the earliest images in the sequence of images that comprise pixel groups representing a speed of movement of the first cellular body that is higher than said threshold speed.

9. The method according to any of the preceding claims, wherein detecting the pixel groups in the respective first images comprises:
detecting a pixel group in an image out of the first images, the detected pixel group comprising pixels representing the first cellular body, said pixels having respective pixel values that distinguish them from pixels representing a background of the image, *e.g.* said pixels having a high intensity value, and
determining a region of interest in the image, the region of interested comprising the pixels representing the first cellular body and pixels representing the background of the image, and
analyzing said region of interest in a subsequent image out of the first images, and identifying in said region of interest pixels having respective pixel values that distinguish them from pixels representing a background of the subsequent image,
determining said distinct pixels in the region of interest to represent at least part of the first cellular body,
based on the identified pixels in the region of interest in the subsequent image, determining a further pixel group in the subsequent image representing the first cellular body.

10. The method according to the preceding claim, further comprising:
updating, e.g. shifting, the region of interest such that it comprises the further pixel group in the subsequent image, and
analyzing said updated region of interest in a further subsequent image, subsequent to the subsequent image, out of the first images, and identifying in the updated region of interest pixels having respective pixel values that distinguish them from pixels representing a background of the further subsequent image,
determining said distinct pixels in the updated region of interest to represent at least part of the first cellular body, and
based on the identified pixels in the region of interest in the subsequent image, determining an even further pixel group in the further subsequent image representing the first cellular body.

11. A method for determining interaction between cellular bodies (50, 51) comprising:
providing a sample holder (3) comprising a holding space (4), wherein the holding space (4) comprises, *e.g.* is substantially filled with, a fluid medium (40) and comprises the functionalized wall surface (48), and the one or more cellular bodies (50, 51) in the fluid medium, wherein the one or more cellular bodies (50, 51) are bound to the functionalized wall surface (48),
applying a force to the one or more cellular bodies (50, 51) for separating at least some of the one or more cellular bodies (50, 51) from the functionalized wall surface (48),
capturing a sequence of images from the one or more cellular bodies (50, 51) while said force is applied, and
determining interaction between the one or more cellular bodies (50, 51) and functionalized wall surface (48) based on the captured images in accordance with any of the preceding claims.

12. A data processing system (100) comprising:
a computer readable storage medium having computer readable program code embodied therewith, and
a processor (102), preferably a microprocessor, coupled to the computer readable storage medium, wherein responsive to executing the computer readable program code, the processor is configured to perform the method according to one or more of the preceding claims 1-10.

13. A computer program or suite of computer programs comprising at least one software code portion or a computer program product storing at least one software code portion, the software code portion, when run on a computer system, being configured for executing the method according to one or more of the claims 1-10.

14. A system (2) for determining interaction between cellular bodies (50, 51) and a functionalized wall surface (48), the system (2) comprising:
a sample holder (3) comprising a holding space (4) for holding a fluid medium (40), a functionalized wall surface (48) and one or more cellular bodies (50, 51), and
a force generator (8) for providing a force to the one or more cellular bodies (50, 51) in the holding space (4), and
an imaging system for capturing images of the one or more cellular bodies (50, 51) in the holding space (4), and
a data processing system (100) according to claim 12.

## Patentansprüche

1. Verfahren zum Bestimmen einer Wechselwirkung zwischen zellularen Körpern (50, 51) und eine funktionalisierten Wandoberfläche (48), wobei das Verfahren aufweist:
Erhalten, bspw. Bestimmen oder Empfangen, einer Sequenz von Bildern, die ein Manipulieren von zellularen Körpern (50, 51) in einem Halteraum (4) darstellen, wobei der Halteraum (4) eine funktionalisierte Wandoberfläche (48) umfasst, die dazu ausgebildet ist, die zellularen Körper zu binden, wobei das Manipulieren ein Anwenden einer Kraft, vorzugsweise einer Kraftrampe, auf zellulare Körper (50, 51) umfasst, die an die funktionalisierte Wandoberfläche (48) gebunden sind, wobei vorzugsweise die Kraft eine Richtung aufweist, die von der funktionalisierten Wandoberfläche (48) weg weist;
Verfolgen erster Orte von ersten Pixelgruppen in jeweiligen ersten Bildern aus der Sequenz von Bildern, wobei jede erste Pixelgruppe in den ersten Bildern einen ersten zellularen Körper aus den zellularen Körpern darstellt, wobei die ersten Orte in den jeweiligen ersten Bildern eine erste Trajektorie des ersten zellularen Körpers definieren, der sich relativ zu der funktionalisierten Wandoberfläche (48) bewegt;
Bestimmen eines oder mehrerer erster Geschwindigkeitswerte des ersten zellularen Körpers an einem oder mehreren Orten der ersten Trajektorie, wobei der eine oder die mehreren Geschwindigkeitswerte größer als null sind;
**gekennzeichnet durch**
Klassifizieren, dass der erste zellulare Körper an der funktionalisierten Wandoberfläche (48) befestigt ist, basierend auf dem einen oder den mehreren ersten Geschwindigkeitswerten und zumindest einem Geschwindigkeitsschwellenwert, wobei vorzugsweise das Klassifizieren ein Bestimmen umfasst, dass der eine oder die mehreren ersten Geschwindigkeitswerte niedriger sind als der zumindest eine Geschwindigkeitsschwellenwert.

2. Verfahren nach Anspruch 1, das weiterhin aufweist:
Verfolgen von zweiten Orten zweiter Pixelgruppen in jeweiligen zweiten Bildern aus der Sequenz von Bildern, wobei jede zweite Pixelgruppe in den zweiten Bildern einen zweiten zellularen Körper aus den zellularen Körpern darstellt, wobei die zweiten Orte in den jeweiligen zweiten Bildern eine zweite Trajektorie des zweiten zellularen Körpers definieren, der sich relativ zu der funktionalisierten Wandoberfläche (48) bewegt;
Bestimmen eines oder mehrerer zweiter Geschwindigkeitswerte des zweiten zellularen Körpers an einer oder mehreren Positionen der zweiten Trajektorie;
Klassifizieren, dass der zweite zellulare Körper von der funktionalisierten Wandoberfläche (48) abgelöst ist, basierend auf dem einen oder den mehreren zweiten Geschwindigkeitswerten und der zumindest einen Schwellengeschwindigkeit, wobei vorzugsweise das Klassifizieren ein Bestimmen umfasst, dass der eine oder die mehreren zweiten Geschwindigkeitswerte größer sind als die zumindest eine Schwellengeschwindigkeit.

3. Verfahren nach Anspruch 1 oder 2, das weiterhin aufweist:
Verfolgen dritter Orte von dritten Pixelgruppen in jeweiligen dritten Bildern aus der Sequenz von Bildern, wobei die dritten Bilder in der Sequenz von Bildern spätere sind als die ersten Bilder, wobei jede dritte Pixelgruppe den ersten zellularen Körper darstellt, wobei die dritten Orte in den jeweiligen dritten Bildern einen weiteren Teil der ersten Trajektorie definieren;
Bestimmen eines oder mehrerer weiterer Geschwindigkeitswerte des ersten zellularen Körpers relativ zu der funktionalisierten Wandoberfläche (48) an einem oder mehreren Punkten der weiteren Trajektorie;
Klassifizieren, basierend auf dem einen oder den mehreren weiteren Geschwindigkeitswerten, dass der erste zellulare Körper von der funktionalisierten Wandoberfläche (48) abgelöst ist, wobei vorzugsweise das Klassifizieren ein Bestimmen umfasst, dass die weitere Geschwindigkeit größer ist als die zumindest eine Schwellengeschwindigkeit, oder wobei das Verfahren nach Anspruch 1 oder 2 weiterhin aufweist:
Bestimmen, dass der erste zellulare Körper sich in einem Cluster befindet, wobei ein Cluster eine Aggregation von zellularen Körpern ist, und Unterlassen des Klassifizierens des ersten zellularen Körpers in dem Cluster als an der funktionalisierten Wandoberfläche (48) befestigt, wobei das Bestimmen, dass der erste zellulare Körper in einem Cluster sitzt, aufweist:
Bestimmen einer Intensität einer Pixelgruppe aus den Pixelgruppen, die eine Bewegung des ersten zellularen Körpers darstellen, und Bestimmen, dass die Intensität der Pixelgruppe größer ist als eine Schwellenintensität, und basierend darauf, dass die Intensität größer ist als die Schwellenintensität, Bestimmen, dass der erste zellulare Körper in einem Cluster sitzt, und/oder
Empfangen eines oder mehrerer Orte, an denen solche Cluster erwartet und/oder identifiziert (bspw. basierend auf einer unmittelbaren Nähe vieler zellularer Körper) werden, und Bestimmen, dass der zellulare Körper einen solchen Ort erreicht hat.

4. Verfahren nach irgendeinem der vorhergehenden Ansprüche, wobei das Bestimmen einer ersten Geschwindigkeit des ersten zellularen Körpers an einem Ort an der ersten Trajektorie aufweist:
Bestimmen oder Empfangen von Zeitpunkten, die mit zwei oder mehreren Bildern, vorzugsweise zwei oder mehr aufeinanderfolgenden Bildern, verknüpft sind, in denen sich der erste zellulare Körper an oder um einen des einen oder der mehreren Orte der ersten Trajektorie herum befindet; und
Bestimmen der ersten Geschwindigkeit basierend auf den Zeitpunkten und den Orten des ersten zellularen Körpers in den zwei oder mehreren Bildern.

5. Verfahren nach irgendeinem der vorhergehenden Ansprüche, wobei die Sequenz von Bildern ein oder mehrere Bilder des Halteraums (4) vor dem Anwenden der Kraft auf die zellularen Körper umfasst, wobei das Verfahren weiterhin aufweist:
Detektieren des Ortes des ersten zellularen Körpers in zumindest einem von dem einen oder den mehreren Bildern des Halteraums (4) vor dem Anwenden der Kraft auf die zellularen Körper, wobei der Ort einen anfänglichen Ort des ersten zellularen Körpers, der an die funktionalisierte Wand gebunden ist, definiert.

6. Verfahren nach dem vorhergehenden Anspruch, wobei ein Abstand zwischen dem anfänglichen Ort und einem weiteren Ort auf der ersten Trajektorie und/oder eine Form der ersten Trajektorie dazu verwendet wird, zu bestimmen, dass der erste zellulare Körper an der funktionalisierten Wandoberfläche (48) mittels eines Tethers, so wie eine Membranröhre, befestigt ist.

7. Verfahren nach Anspruch 5 oder 6, wobei die Sequenz von Bildern Initialisierungsbilder aufweist, die den einen oder die mehreren zellularen Körper (50, 51) darstellen, die an die funktionalisierte Wandoberfläche (48) binden, und wobei das Detektieren einer Pixelgruppe an einem anfänglichen Ort in dem anfänglichen Bild aufweist:
Detektieren von Initialisierungspixelgruppen in den jeweiligen Initialisierungsbildern, wobei die Initialisierungspixelgruppen eine Initialisierungsbewegung des ersten zellularen Körpers darstellen, und
Verfolgen des Ortes des ersten zellularen Körpers in den Initialisierungsbildern, wobei für jedes Initialisierungsbild der erste zellulare Körper als verfolgbar oder nicht verfolgbar klassifiziert wird, indem ein Algorithmus für einen Bereich von Interesse (ROI) verwendet wird, der dazu konfiguriert ist, einen zellularen Körper zu verfolgen, wenn er sich relativ zu der funktionalisierten Wandoberfläche (48) bewegt, und
Bestimmen eines Absetzereignisses, wenn während des Verfolgens des ersten zellularen Körpers dieser als nicht verfolgbar klassifiziert wird, wobei der Ort in dem Initialisierungsbild, an dem das Absetzereignis detektiert wird, den anfänglichen Ort in dem anfänglichen Bild definiert und somit eine Pixelgruppe an dem anfänglichen Ort in dem anfänglichen Bild definiert, und wobei
die detektierten Pixelgruppen in den jeweiligen ersten Bildern an verschiedenen Orten in den jeweiligen ersten Bildern detektiert werden, wobei die unterschiedlichen Orte einen Verfolgungspfad bilden, wobei der Verfolgungsstartpunkt des Verfolgungspfades einen Pop-up-Ort in einem Verfolgungsstartbild aus den ersten Bildern definiert, wobei das Verfolgungsstartbild mit einem Verfolgungsstartzeitpunkt verknüpft ist, wobei das Verfahren aufweist:
Bestimmen des Abstandes zwischen dem anfänglichen Ort und dem Pop-up-Ort, und
Bestimmen einer Zeitdifferenz zwischen dem Verfolgungsstartzeitpunkt und einem Zeitpunkt der Kraftanwendung, der einen Zeitpunkt angibt, an dem eine Kraft auf den ersten zellularen Körper angewendet wurde,
Bestimmen einer Geschwindigkeit basierend auf dem Zeitunterschied zwischen dem Verfolgungsstartzeitpunkt und dem Zeitpunkt der Kraftanwendung und auf dem Abstand zwischen dem anfänglichen Ort und dem Pop-up-Ort,
Bestimmen, dass diese Geschwindigkeit geringer ist als eine zweite Schwellengeschwindigkeit und/oder größer als eine dritte Schwellengeschwindigkeit ist, und
basierend auf dieser Bestimmung, Bestimmen, dass der erste zellulare Körper mit dem anfänglichen Ort verknüpft ist, bspw. Bestimmen, dass der erste zellulare Körper an der funktionalisierten Wandoberfläche (48) an dem anfänglichen Ort befestigt ist.

8. Verfahren nach irgendeinem der vorhergehenden Ansprüche, das aufweist:
Bestimmen von Ablösebildern aus der Sequenz von Bildern, wobei die Ablösebilder die frühesten Bilder in der Sequenz von Bildern sind, die Pixelgruppen aufweisen, die eine Bewegungsgeschwindigkeit des ersten zellularen Körpers darstellen, die größer ist als die Schwellengeschwindigkeit.

9. Verfahren nach irgendeinem der vorhergehenden Ansprüche, wobei das Detektieren der Pixelgruppen in den jeweiligen ersten Bildern aufweist:
Detektieren einer Pixelgruppe in einem Bild aus den ersten Bildern, wobei die detektierte Pixelgruppe Pixel aufweist, die den ersten zellularen Körper darstellen, wobei die Pixel jeweilige Pixelwerte aufweisen, die sie von Pixeln unterscheiden, die einen Hintergrund des Bildes darstellen, wobei bspw. die genannten Pixel einen hohen Intensitätswert aufweisen, und
Bestimmen eines Bereichs von Interesse in dem Bild, wobei der Bereich von Interesse die Pixel aufweist, die den ersten zellularen Körper darstellen, und Pixel, die den Hintergrund des Bildes darstellen, und
Analysieren des Bereichs von Interesse in einem nachfolgenden Bild aus den ersten Bildern, und Identifizieren in dem Bereich von Interesse von Pixeln, die jeweilige Pixelwerte aufweisen, die sie von Pixeln unterscheiden, die einen Hintergrund des nachfolgenden Bildes darstellen,
Bestimmen der genannten unterscheidenden Pixel in dem Bereich von Interesse, um zumindest einen Teil des ersten zellularen Körpers darzustellen,
basierend auf den identifizierten Pixeln in dem Bereich von Interesse in dem nachfolgenden Bild, Bestimmen einer weiteren Pixelgruppe in dem nachfolgenden Bild, das den ersten zellularen Körper darstellt.

10. Verfahren nach dem vorhergehenden Anspruch, das weiterhin aufweist:
Aktualisieren, bspw. Verschieben, des Bereichs von Interesse derart, dass er die weitere Pixelgruppe in dem nachfolgenden Bild aufweist, und
Analysieren des aktualisierten Bereichs von Interesse in einem weiteren nachfolgenden Bild aus den ersten Bildern, das dem nachfolgenden Bild nachfolgt, und Identifizieren von Pixeln in dem aktualisierten Bereich von Interesse, die jeweilige Pixelwerte aufweisen, die sie von Pixeln unterscheiden, die einen Hintergrund des weiteren nachfolgenden Bildes darstellen,
Bestimmen der unterscheidenden Pixel in dem aktualisierten Bereich von Interesse, um zumindest einen Teil des ersten zellularen Körpers darzustellen, und
basierend auf den identifizierten Pixeln in dem Bereich von Interesse in dem nachfolgenden Bild, Bestimmen einer noch weiteren Pixelgruppe in dem weiteren nachfolgenden Bild, die den ersten zellularen Körper darstellt.

11. Verfahren zum Bestimmen einer Wechselwirkung zwischen zellularen Körpern (50, 51), das aufweist:
Bereitstellen eines Probenhalters (3), der einen Halteraum (4) aufweist, wobei der Halteraum (4) ein fluides Medium (40), bspw. mit diesem im Wesentlichen gefüllt ist, und die funktionalisierte Wandoberfläche (48) und den einen oder die mehreren zellularen Körper (50, 51) in dem fluiden Medium aufweist, wobei der eine oder die mehreren zellu-Iaren Körper (50, 51) an die funktionalisierte Wandoberfläche (48) gebunden sind,
Anwenden einer Kraft auf den einen oder die mehreren zellularen Körper (50, 51) zum Trennen von zumindest einigen von dem einen oder den mehreren zellularen Körpern (50, 51) von der funktionalisierten Wandoberfläche (48),
Aufnehmen einer Sequenz von Bildern von dem einen oder den mehreren zellularen Körpern (50, 51), während die genannte Kraft angewendet wird, und
Bestimmen einer Wechselwirkung zwischen dem einen oder den mehreren zellularen Körpern (50, 51) und der funktionalisierten Wandoberfläche (48) basierend auf den aufgenommenen Bildern in Übereinstimmung mit irgendeinem der vorhergehenden Ansprüche.

12. Datenverarbeitungssystem (100), das aufweist:
ein computerlesbares Speichermedium, das einen darin enthaltenen computerlesbaren Programmcode aufweist, und
einen Prozessor (102), vorzugsweise einen Mikroprozessor, der mit dem computerlesbaren Speichermedium gekoppelt ist, wobei im Ansprechen auf das Ausführen des computerlesbaren Programmcodes der Prozessor dazu konfiguriert ist, das Verfahren nach einem oder mehreren der vorhergehenden Ansprüche 1-10 auszuführen.

13. Computerprogramm oder Computerprogrammpaket, das zumindest einen Softwarecode-Abschnitt aufweist, oder ein Computerprogrammprodukt, das zumindest einen Softwarecode-Abschnitt speichert, wobei der Softwarecode-Abschnitt, wenn er auf einem Computersystem ausgeführt wird, dazu konfiguriert ist, das Verfahren nach einem oder mehreren der Ansprüche 1-10 auszuführen.

14. System (2) zum Bestimmen einer Wechselwirkung zwischen zellularen Körpern (50, 51) und einer funktionalisierten Wandoberfläche (48), wobei das System (2) aufweist:
einen Probenhalter (3), der einen Halteraum (4) zum Halten eines fluiden Mediums (40), eine funktionalisierte Wandoberfläche (48) und einen oder mehrere zellulare Körper (50, 51) aufweist, und
einen Kraftgenerator (8) zum Bereitstellen einer Kraft auf den einen oder die mehreren zellularen Körper (50, 51) in dem Halteraum (4), und
ein Abbildungssystem zum Aufnehmen von Bildern des einen oder der mehreren zellularen Körper (50, 51) in dem Halteraum (4), und
ein Datenverarbeitungssystem (100) gemäß Anspruch 12.

## Revendications

1. Procédé de détermination d'une interaction entre des corps cellulaires (50, 51) et une surface de paroi fonctionnalisée (48), le procédé comprenant :
l'obtention, par exemple la détermination ou la réception, d'une séquence d'images représentant une manipulation de corps cellulaires (50, 51) dans un espace de réception (4), l'espace de réception (4) comprenant une surface de paroi fonctionnalisée (48) configurée pour se lier aux corps cellulaires, la manipulation comprenant l'application d'une force, de préférence d'une rampe de force, sur les corps cellulaires (50, 51) attachés à la surface de paroi fonctionnalisée (48), de préférence la force ayant une direction s'éloignant de la surface de paroi fonctionnalisée (48) ;
le suivi de premiers emplacements de premiers groupes de pixels sur des premières images respectives parmi la séquence d'images, chaque premier groupe de pixels sur les premières images représentant un premier corps cellulaire parmi les corps cellulaires, les premiers emplacements sur les premières images respectives définissant une première trajectoire du premier corps cellulaire se déplaçant par rapport à la surface de paroi fonctionnalisée (48) ;
la détermination d'une ou de plusieurs premières valeurs de vitesse du premier corps cellulaire à un ou plusieurs emplacements de la première trajectoire, les une ou plusieurs valeurs de vitesse étant supérieures à zéro ; **caractérisé par**
le fait de classer que le premier corps cellulaire est attaché à la surface de paroi fonctionnalisée (48) sur la base des une ou plusieurs premières valeurs de vitesse et d'au moins une valeur de vitesse seuil, de préférence le classement comprenant la détermination que les une ou plusieurs premières valeurs de vitesse sont inférieures à la au moins une valeur de vitesse seuil.

2. Procédé selon la revendication 1, comprenant en outre :
le suivi de deuxièmes emplacements de deuxièmes groupes de pixels sur des deuxièmes images respectives parmi la séquence d'images, chaque deuxième groupe de pixels sur les deuxièmes images représentant un deuxième corps cellulaire parmi les corps cellulaires, dans lequel les deuxièmes emplacements sur les deuxièmes images respectives définissent une deuxième trajectoire du deuxième corps cellulaire se déplaçant par rapport à la surface de paroi fonctionnalisée (48) ;
la détermination d'une ou de plusieurs deuxièmes valeurs de vitesse du deuxième corps cellulaire à une ou plusieurs positions de la deuxième trajectoire ;
le fait de classer que le deuxième corps cellulaire est détaché de la surface de paroi fonctionnalisée (48) sur la base des une ou plusieurs deuxièmes valeurs de vitesse et de la au moins une vitesse seuil, de préférence le classement comprenant la détermination que les une ou plusieurs deuxièmes valeurs de vitesse sont supérieures à la au moins une vitesse seuil.

3. Procédé selon la revendication 1 ou 2, comprenant en outre :
le suivi de troisièmes emplacements de troisièmes groupes de pixels sur des troisièmes images respectives parmi la séquence d'images, les troisièmes images arrivant plus tard dans la séquence d'images que les premières images, chaque troisième groupe de pixels représentant le premier corps cellulaire, dans lequel les troisièmes emplacements sur les troisièmes images respectives définissent une partie supplémentaire de la première trajectoire ;
la détermination d'une ou de plusieurs valeurs de vitesse supplémentaires du premier corps cellulaire par rapport à la surface de paroi fonctionnalisée (48) à un ou plusieurs points de la trajectoire supplémentaire ;
le fait de classer que le premier corps cellulaire est détaché de la surface de paroi fonctionnalisée (48) sur la base des une ou plusieurs valeurs de vitesse supplémentaires, de préférence le classement comprenant la détermination que la vitesse supplémentaire est supérieure à la au moins une vitesse seuil, ou le procédé selon la revendication 1 ou 2, comprenant en outre :
la détermination que le premier corps cellulaire est situé dans un regroupement, un regroupement étant une agrégation de corps cellulaires, et le fait de s'abstenir de classer le premier corps cellulaire dans le regroupement comme étant attaché à la surface de paroi fonctionnalisée (48), dans lequel la détermination que le premier corps cellulaire se trouve dans un regroupement comprend :
la détermination d'une intensité d'un groupe de pixels parmi lesdits groupes de pixels représentant le déplacement du premier corps cellulaire, et la détermination que l'intensité du groupe de pixels est supérieure à une intensité seuil, et sur la base de l'intensité qui est supérieure à l'intensité seuil, la détermination que le premier corps cellulaire se trouve dans un regroupement, et/ou
la réception d'un ou de plusieurs emplacements où de tels regroupements sont attendus et/ou identifiés (par exemple, sur la base de la proximité immédiate de nombreux corps cellulaires) et la détermination que le corps cellulaire a atteint un tel emplacement.

4. Procédé selon l'une quelconque des revendications précédentes, dans lequel la détermination d'une première vitesse du premier corps cellulaire à un emplacement sur la première trajectoire comprend :
la détermination ou la réception d'instances temporelles associées à deux images ou plus, de préférence deux images ou plus qui se suivent, sur lesquelles le premier corps cellulaire est situé au niveau ou autour de l'un des un ou plusieurs emplacements de la première trajectoire ; et
la détermination de la première vitesse sur la base des instances temporelles et des emplacements du premier corps cellulaire sur les deux images ou plus.

5. Procédé selon l'une quelconque des revendications précédentes, dans lequel la séquence d'images comprend une ou plusieurs images de l'espace de réception (4) avant d'appliquer la force aux corps cellulaires, le procédé comprenant en outre : la détection de l'emplacement du premier corps cellulaire sur au moins une des une ou plusieurs images de l'espace de réception (4) avant d'appliquer la force aux corps cellulaires, l'emplacement définissant un emplacement initial du premier corps cellulaire lié à la paroi fonctionnalisée.

6. Procédé selon la revendication précédente, dans lequel une distance entre l'emplacement initial et un emplacement supplémentaire sur la première trajectoire et/ou une forme de la première trajectoire sont utilisées pour déterminer que le premier corps cellulaire est attaché à la surface de paroi fonctionnalisée (48) au moyen d'une attache, telle qu'un tube à membrane.

7. Procédé selon la revendication 5 ou 6, dans lequel la séquence d'images comprend des images d'initialisation représentant les un ou plusieurs corps cellulaires (50, 51) se liant à la surface de paroi fonctionnalisée (48), et dans lequel la détection d'un groupe de pixels à un emplacement initial sur l'image initiale comprend :
la détection de groupes de pixels d'initialisation sur les images d'initialisation respectives, les groupes de pixels d'initialisation représentant un mouvement d'initialisation du premier corps cellulaire, et
le suivi de l'emplacement du premier corps cellulaire sur les images d'initialisation, dans lequel pour chaque image d'initialisation, le premier corps cellulaire est classé comme étant traçable ou non traçable en utilisant un algorithme de région d'intérêt (ROI) qui est configuré pour suivre un corps cellulaire lorsqu'il se déplace par rapport à la surface de paroi fonctionnalisée (48), et
la détermination d'un événement de stabilisation si, pendant le suivi du premier corps cellulaire, il est classé comme non traçable, l'emplacement sur l'image d'initialisation sur laquelle l'événement de stabilisation est détecté définissant l'emplacement initial sur l'image initiale et définissant ainsi un groupe de pixels à l'emplacement initial sur l'image initiale, et dans lequel les groupes de pixels détectés sur les premières images respectives sont détectés à différents emplacements sur les premières images respectives, les différents emplacements formant un trajet de suivi, le point de départ de suivi du trajet de suivi définissant un emplacement contextuel sur une image de départ de suivi parmi les premières images, l'image de départ de suivi étant associée à une instance temporelle de début de suivi, le procédé comprenant
la détermination de la distance entre l'emplacement initial et l'emplacement contextuel, et
la détermination d'une différence de temps entre l'instance temporelle de début de suivi et une instance temporelle d'application de force indiquant une instance temporelle à laquelle une force a été appliquée au premier corps cellulaire,
la détermination d'une vitesse sur la base de la différence de temps entre l'instance temporelle de début de suivi et l'instance temporelle d'application de force et sur la distance entre l'emplacement initial et l'emplacement contextuel,
la détermination que cette vitesse est inférieure à une deuxième vitesse seuil et/ou supérieure à une troisième vitesse seuil, et
sur la base de cette détermination, la détermination que le premier corps cellulaire est associé à l'emplacement initial, par exemple la détermination que le premier corps cellulaire est attaché à la surface de paroi fonctionnalisée (48) à l'emplacement initial.

8. Procédé selon l'une quelconque des revendications précédentes, comprenant :
la détermination d'images de détachement parmi la séquence d'images, les images de détachement étant les premières images de la séquence d'images qui comprennent des groupes de pixels représentant une vitesse de déplacement du premier corps cellulaire qui est supérieure à ladite vitesse seuil.

9. Procédé selon l'une quelconque des revendications précédentes, dans lequel la détection des groupes de pixels dans les premières images respectives comprend :
la détection d'un groupe de pixels sur une image parmi les premières images, le groupe de pixels détecté comprenant des pixels représentant le premier corps cellulaire, lesdits pixels ayant des valeurs de pixels respectives qui les distinguent des pixels représentant un arrière-plan de l'image, par exemple lesdits pixels ayant une valeur d'intensité élevée, et
la détermination d'une région d'intérêt sur l'image, la région d'intérêt comprenant les pixels représentant le premier corps cellulaire et des pixels représentant l'arrière-plan de l'image, et
l'analyse de ladite région d'intérêt sur une image suivante parmi les premières images, et l'identification dans ladite région d'intérêt de pixels ayant des valeurs de pixels respectives qui les distinguent des pixels représentant un arrière-plan de l'image suivante,
la détermination desdits pixels distincts dans la région d'intérêt pour représenter au moins une partie du premier corps cellulaire,
sur la base des pixels identifiés dans la région d'intérêt sur l'image suivante, la détermination d'un groupe de pixels supplémentaire sur l'image suivante représentant le premier corps cellulaire.

10. Procédé selon la revendication précédente, comprenant en outre :
la mise à jour, par exemple le décalage, de la région d'intérêt de telle sorte qu'elle comprenne le groupe de pixels supplémentaire sur l'image suivante, et
l'analyse de ladite région d'intérêt mise à jour sur une autre image suivante, postérieure à l'image suivante,
parmi les premières images, et l'identification dans la région d'intérêt mise à jour de pixels ayant des valeurs de pixels respectives qui les distinguent des pixels représentant un arrière-plan de l'autre image suivante,
la détermination desdits pixels distincts dans la région d'intérêt mise à jour pour représenter au moins une partie du premier corps cellulaire, et
sur la base des pixels identifiés dans la région d'intérêt sur l'image suivante, la détermination d'un autre groupe de pixels supplémentaire sur l'autre image suivante représentant le premier corps cellulaire.

11. Procédé de détermination d'une interaction entre des corps cellulaires (50, 51) comprenant :
la fourniture d'un porte-échantillon (3) comprenant un espace de réception (4), dans lequel l'espace de réception (4) comprend, par exemple est sensiblement rempli avec, un milieu fluide (40) et comprend la surface de paroi fonctionnalisée (48), et les un ou plusieurs corps cellulaires (50, 51) dans le milieu fluide, dans lequel les un ou plusieurs corps cellulaires (50, 51) sont liés à la surface de paroi fonctionnalisée (48),
l'application d'une force aux un ou plusieurs corps cellulaires (50, 51) pour séparer au moins certains des un ou plusieurs corps cellulaires (50, 51) de la surface de paroi fonctionnalisée (48),
la capture d'une séquence d'images des un ou plusieurs corps cellulaires (50, 51) pendant que ladite force est appliquée, et
la détermination d'une interaction entre les un ou plusieurs corps cellulaires (50, 51) et la surface de paroi fonctionnalisée (48) sur la base des images capturées conformément à l'une quelconque des revendications précédentes.

12. Système de traitement de données (100) comprenant :
un support de stockage lisible par ordinateur auquel est intégré un code de programme lisible par ordinateur, et un processeur (102), de préférence un microprocesseur, couplé au support de stockage lisible par ordinateur, dans lequel en réponse à l'exécution du code de programme lisible par ordinateur, le processeur est configuré pour mettre en oeuvre le procédé selon une ou plusieurs des revendications 1 à 10 précédentes.

13. Programme informatique ou suite de programmes informatiques comprenant au moins une partie de code logiciel ou un produit de programme informatique stockant au moins une partie de code logiciel, la partie de code logiciel, lorsqu'elle est exécutée sur un système informatique, étant configurée pour mettre en oeuvre le procédé selon une ou plusieurs des revendications 1 à 10.

14. Système (2) de détermination d'une interaction entre des corps cellulaires (50, 51) et une surface de paroi fonctionnalisée (48), le système (2) comprenant :
un porte-échantillon (3) comprenant un espace de réception (4) pour contenir un milieu fluide (40), une surface de paroi fonctionnalisée (48) et un ou plusieurs corps cellulaires (50, 51), et
un générateur de force (8) pour fournir une force aux un ou plusieurs corps cellulaires (50, 51) dans l'espace de réception (4), et
un système d'imagerie pour capturer des images des une ou plusieurs corps cellulaires (50, 51) dans l'espace de réception (4), et
un système de traitement de données (100) selon la revendication 12.
